# EUROPEAN PATENT SPECIFICATION

(11) **EP 2 308 313 B1**
(45) Date of publication and mention of the grant of the patent: **30.03.2016**
(21) Application number: 10186812.3
(22) Date of filing: 07.10.2010
(51) Int. Cl.: A22C 7/00

(54) **Plant for treating a food product**
Anlage zur Behandlung eines Nahrungsmittels
Installation de traitement d'un produit alimentaire

(30) Priority: 07.10.2009 IT MO20090243
(43) Date of publication of application: 13.04.2011
(73) Proprietor: VE.MA.C. Societa' A Responsabilita' Limitata, 41051 Castelnuovo Rangone (MO) (IT)
(72) Inventor: Costantini, Maurizio, 41057, Spilamberto (MO) (IT); Malagoli, Uliano, 41041, Formigine (MO) (IT); Vezzali, Franco, 41057, Spilamberto (MO) (IT)
(74) Representative: Crugnola, Pietro

(56) References cited:
- EP-A1- 0 570 323
- EP-A1- 0 744 129
- WO-A1-99/03353
- FR-A1- 2 459 000
- FR-A1- 2 773 437

## Description

The invention relates to a plant for treating a food product, in particular a ham, or a cut of meat, contained inside a mould to be able to be pressed and shaped so as to be able to take on a substantially parallelpipedon shape, and to be thus able to be subjected to subsequent treatments, such as, for example, a freezing treatment to then be sliced by industrial high-speed slicing machines, such as, for example, in the case of a cured ham, or to processing preceding the curing step, such as, for example in the case of speck.

Plants are known for treating a food product that use moulds consisting of a plurality of mould elements that are superimposable on one another, each of which is provided with at least one seat that has the shape of a channel that is opened towards the top, inside which the food product is insertable that is to be pressed and shaped and subsequently frozen. Each mould element is provided with compression means, consisting of a slidable piston connected to a pushing wall, to compress in a longitudinal direction the product contained in the seat of the mould element and to close, in this manner, the mould element.

When the mould elements are superimposed, each mould element acts as a cover for the seat of the element immediately below and each compression means acts on the product contained in the seat of the element immediately below.

Consequently, in order to be able to insert the food product to be pressed and in order to be able to extract the food product from the mould elements, once the food product has been pressed, it is necessary to remove the compression means from the seat of each mould element, in order to then be able to remove the mould element from the mould and expel the food product from the mould.

In fact, once all the mould elements have been opened and removed from the mould, the openings located at the end of the channel of each mould element are freed and the food product can be pushed outside the mould by ejecting means. EP 0570323 A1 discloses an automatic mould unloader for meat products, such as hams. The mould unloader comprises four supports designed to lodge and fasten different moulds, assembled in a supporting structure applied to the displacement of those moulds in a closed circuit. Each support includes a frame for mounting, two exchangeable plates each of them including an opening allowing the body of a mould to be inserted, with an external rim thereof, which surrounds the mouthpiece, abutting on the periphery of said opening. The exchangeable plates include means to temporarily withhold the body of the mould to the mentioned plate and, simultaneously, to release the locking arms which fastens the lid to the mould, the said frames passing along their displacement in closed circuit, in sequence, at least by: a first station for loading to the plates attached to the frames a mould charged with the product just backed, a second station having a lid removing and evacuating device, a third station including means, for unloading the product from the mould and evacuating it outside, and a fourth station wherein the evacuation of the empty mould occurs.

FR 2773437 A1 discloses a mould for food products, especially for cooking ham. The mould comprises a plurality of stackable units, each carrying a number of parallel troughs. Each trough is open at the top, and is closed by a cover attached to the base of the trough above, when stacked. The products inside the trough are compressed longitudinally by pressure from one end. Each trough has its own compression unit, including a piston moved by a spring. The shaft of the piston moves inside a tube, which limits the range of its movement in both directions. A notch on the shaft and tab at the end of the tube allow the piston to be locked in position at its outermost point of travel, this allows the trough to be filled without being under pressure. The compression springs for a number of troughs may be attached to a single plate which can be moved back and forth by some means.

In plants for treating a food product of known type the laborious opening and closing manoeuvres of each mould element occur in specific opening and closing stations and are conducted manually by operators entrusted with such functions.

The manoeuvres for opening and for closing each mould element thus require a significant outlay of time, energy, labour and costs, as they require the intervention of assigned personnel.

An object of the invention is to overcome the drawbacks of known plants for treating a food product.

Another object of the invention is to obtain a plant for treating a food product.

According to the invention, an apparatus for opening a mould according to claim 1, an apparatus for closing a mould according to claim 10, and a plant for treating a food product according to claim 15 are provided.

Owing to the invention, it is possible to obtain a plant for treating a food product that enables the operations of opening and closing of the mould elements of a mould suitable for containing a food product to be accelerated and facilitated.

Further, it is possible to obtain a plant for treating a food product that is significantly more efficient and cheaper than plants of known type.

The invention can be better understood and implemented with reference to the attached drawings that illustrate embodiments thereof by way of non-limiting example, in which:
Figure 1 is a top view of a mould used in a plant for treating a food product according to the invention;
Figure 2 is a front view of a mould element of the mould in Figure 1;
Figure 3 is a top view of the plant for treating a food product according to the invention;
Figure 4 is a front view of an apparatus for opening moulds used in the plant for treating a food product according to the invention;
Figure 5 is a side view of the apparatus for opening moulds of Figure 4;
Figure 6 is a sectioned partial top view of an extracting device with which the apparatus for opening moulds of Figure 4 is provided in an operating configuration;
Figure 7 is a sectioned partial top view of the extracting device of Figure 6 in a further operating configuration;
Figure 8 is a section taken along a plane VIII-VIII of Figure 4;
Figure 9 is an enlarged and partial side view of the extracting device of Figure 6 in a rest operating configuration;
Figure 10 is a section taken along the plane X-X of Figure 4 showing a hooking means of the extracting device of Figure 6;
Figure 11 is a partial and enlarged view of a hooking means of Figure 10;
Figure 12 is a partial view of the extracting device of Figure 6 in a first operating configuration;
Figure 13 is a partial view of the extracting device of Figure 6 in a second operating configuration;
Figure 14 is a partial view of the extracting device of Figure 6 in a third operating configuration;
Figure 15 is a partial view of the extracting device of Figure 6 in a fourth operating configuration;
Figure 16 is a partial view of the extracting device of Figure 6 in a fifth operating configuration;
Figure 17 is a partial view of the extracting device of Figure 6 in a sixth operating configuration;
Figure 18 is a partial view of the extracting device of Figure 6 in a seventh operating configuration;
Figure 19 is a partial view of the extracting device of Figure 6 in an eighth operating configuration;
Figure 20 is a front view of an apparatus for closing moulds that is used in the plant for treating a food product according to the invention;
Figure 21 is a side view of the apparatus for closing moulds of Figure 20;
Figure 22 is a section taken along the plane XXII-XXII of Figure 20;
Figure 23 is a top view of a version of the plant for treating a food product according to the invention.

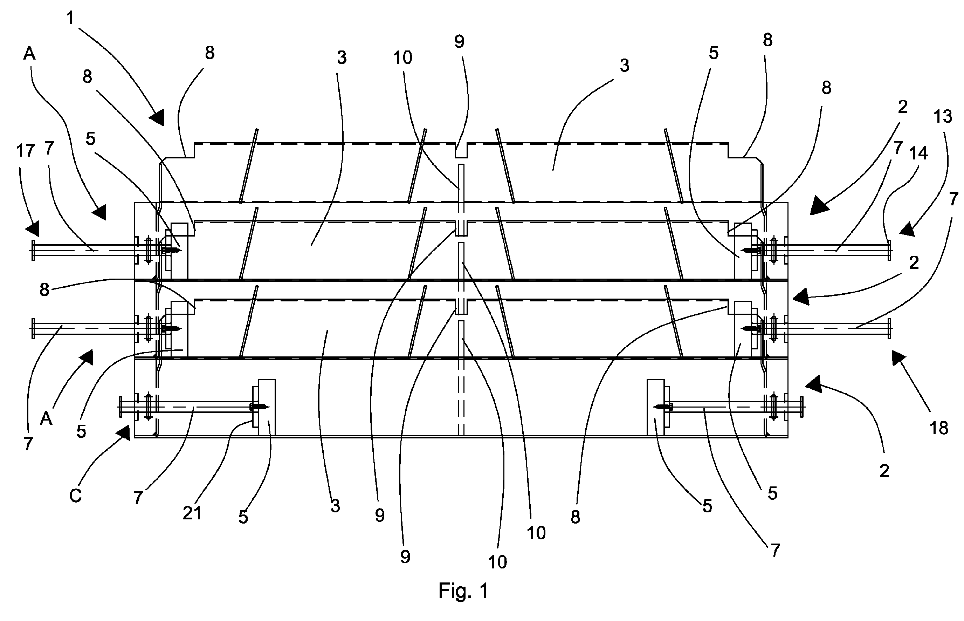

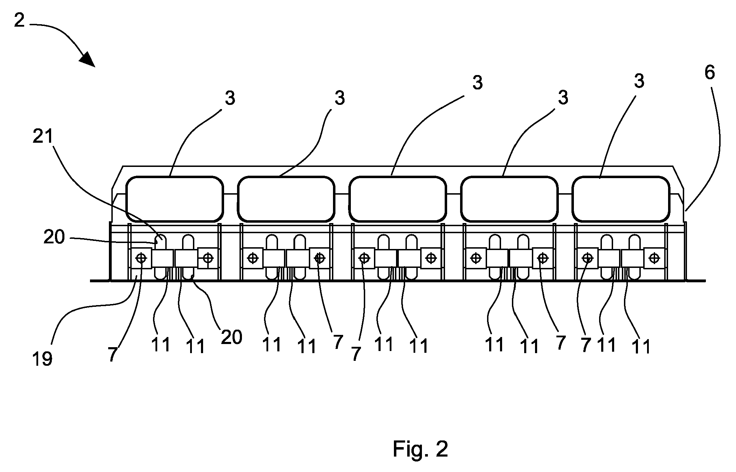

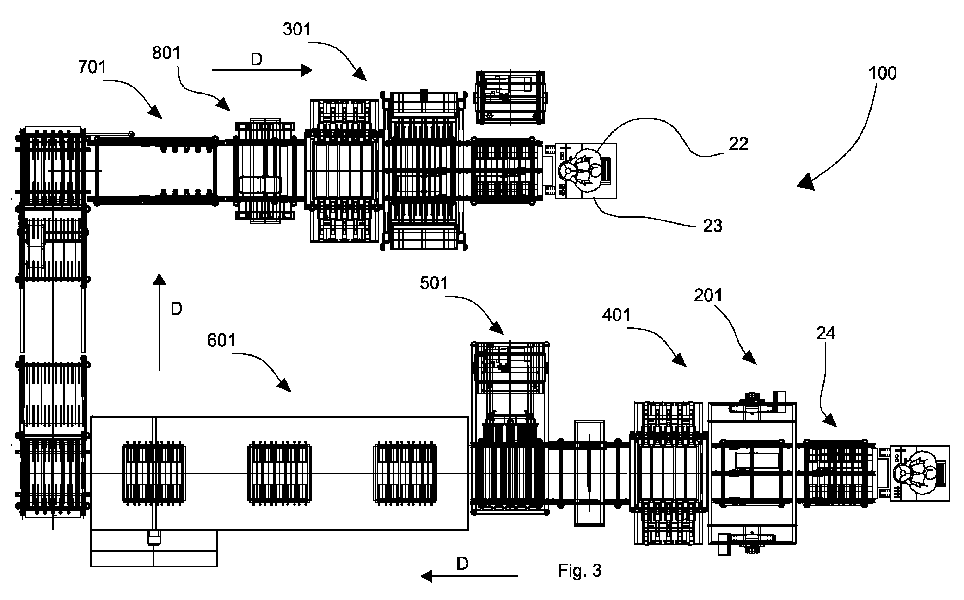

With reference to Figure 3, a plant 100 for treating a food product according to the invention is shown, this food product being contained in a mould 1, shown in Figures 1 and 2.

Mould 1 comprises a plurality of mould elements 2 that are superimposable on one another, each one of which comprises a frame 6 (Figure 2) to which a plurality of tubular elements 3 is fixed stiffly, which are open at both ends, intended for receiving the products to be pressed, for example hams or cuts of meat. The tubular elements 3 have a rectangular section, with rounded vertices.

At opposite ends of the tubular elements 3 respective openings 8 are provided, which made in the upper part of each tubular element 3. At opposite ends of the lower part of the frame 6, below the tubular elements 3, pressing elements 5 are slidingly coupled, each of which is provided with a pair of rods 7, that are slidingly coupled with the frame 6 and act as a guide for the pressing elements 5. The number of pressing elements 5 is the same as the number of tubular elements 3 of each mould element 2.

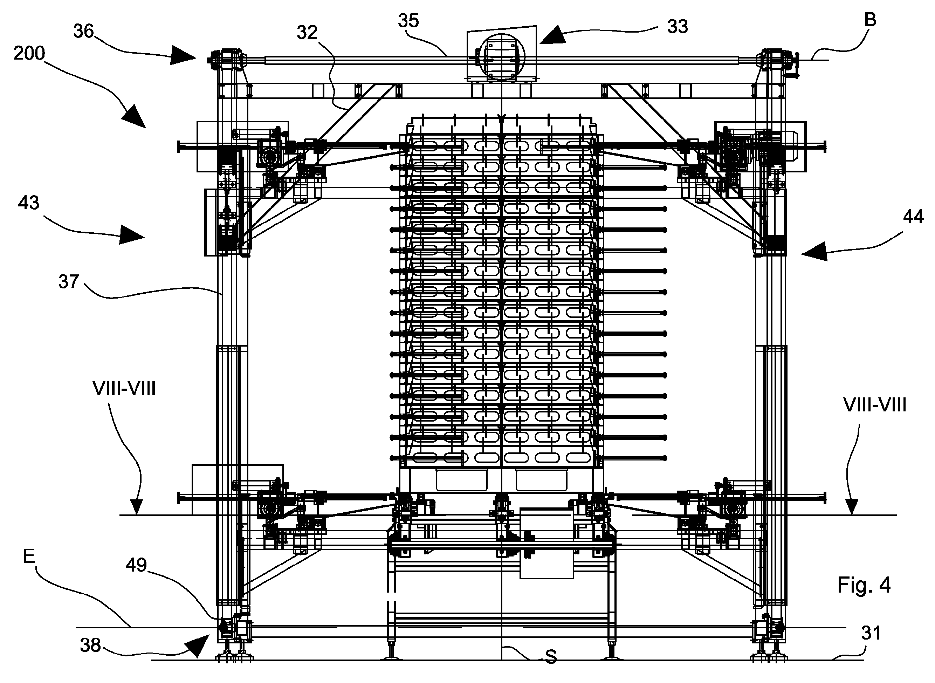

Each end 17, 18 of each rod 7 is provided with a hookable portion 13, with which an apparatus for opening moulds 200 (Figure 4), included in the plant 100, interacts, as will be explained in detail below, to hook onto the rods 7 and consequently slide the pressing elements 5 towards the free ends of each tubular element 3, thus to free each mould element 2 from the pressing elements 5.

The hookable portion 13 may comprise a protruding element 14, for example of disc shape, at least a part of which protrudes beyond a side surface 16 of the rod 7.

The protruding element 14 can be fixed to the rod 7 by suitable fixing means, which is not shown in the Figures, which may, for example, comprise screws, or can be welded to the rod 7.

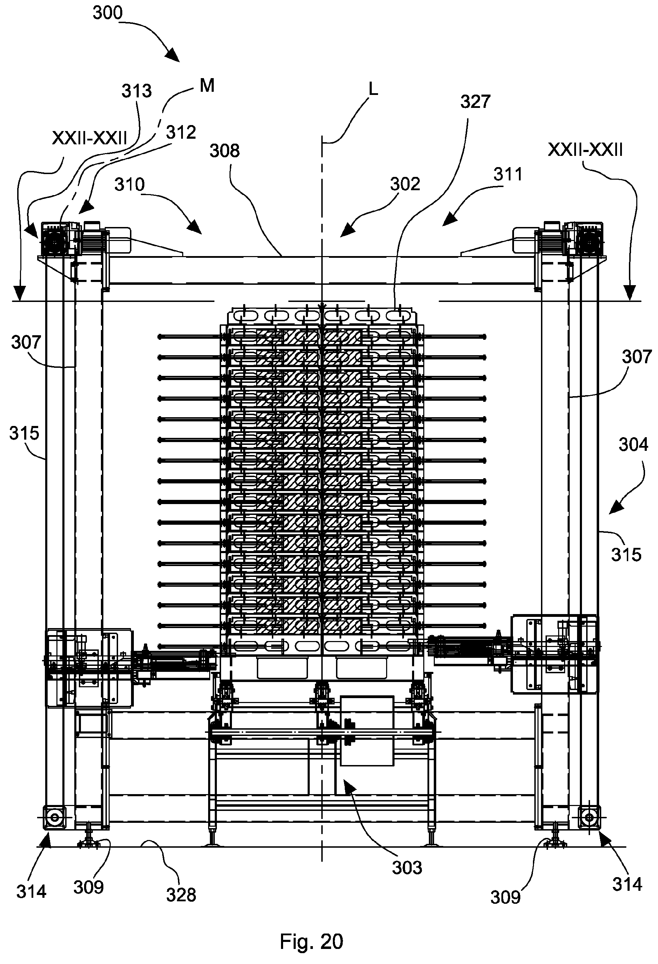

Along the side walls of the tubular elements 3 an opening 327 (Figure 20) can be obtained that is arranged for receiving a hook element 326 of a blocking device 325 comprised in the plant 100 and shown in detail further on in the description.

In a wall element 19 of the frame 6 located in the lower part of the frame 6, below each tubular element 3 a through opening 20 can be obtained, for example of slot shape. A plurality of through openings 20 can also be provided, for example two for each wall element 19, as shown in Figure 2.

The through openings 20 enable an apparatus for closing moulds 300 (Figure 20), included in the plant 100, to contact a pushing surface 21 of the pressing element 5 in order to push the pressing element 5 inside each tubular element 3 and to compress in this manner the food product contained therein.

When two mould elements 2 are superimposed, the pressing elements 5 of the upper mould element can be inserted into the openings 8 of the tubular elements 3 of the mould element 2 below so as to be able to slide inside said tubular elements 3.

In the upper part of each tubular element 3, in a substantially central position, a transverse opening 9 is provided. In the lower part of the frame 6, below each tubular element 3, in a central position corresponding to the position of the transverse opening 9, a plurality of transverse dividing elements 10 can be fixed stiffly that can be the same in number as the number of the tubular elements 3. The transverse dividing elements 10 are arranged in such a way that, when two mould elements 2 are superimposed, the dividing elements 10 of the upper mould element 2 are inserted into the transverse openings 9 of the tubular elements 3 of the mould element 2 below, in such a manner as to divide said tubular elements 3 into two parts. In this manner, in each tubular element 3 two units of product, for example two hams or two cuts of meat, can be pressed separately.

The dividing elements 10, being fixed stiffly to the frame 6, remain in a fixed position inside the respective tubular elements 3 and cannot be subjected to traversing that could damage or deform the products contained in the tubular elements 3.

In order to assemble the mould 1 it is thus sufficient to superimpose on one another the mould elements 2, taking care to insert the pressing elements 5 into the openings 8 of the tubular elements 3. No mechanical fixing between the various mould elements is necessary because the products are pressed inside the tubular elements 3 and the forces that develop during the pressing step are not transmitted between one mould element 2 and the mould elements 2 adjacent thereto.

In the frame 6 monodirectional blocking elements 11 are provided that act on the rods 7 of the pressing elements 5, such as not to hinder the sliding thereof inside the tubular elements 3, but to prevent the sliding thereof to the outside of the tubular elements 3.

This ensures that the pressure applied to the products contained in the tubular elements 3 by the pressing elements 5 is also maintained when the push applied to the pushing surfaces 21 by the apparatus for closing moulds 300 ceases. In other words, the pressing elements 5 remain in abutment and push against the pressed food products contained in the tubular elements 3 even after the mould 1, removed from a mould closing station in which it is closed, is transported, for example to a warehouse.

As shown in Figure 3, the plant 100 comprises a plurality of treating stations, arranged in succession along an advancing direction D followed by the moulds 1 and indicated by an arrow in Figure 3. In each treating station, the mould 1 undergoes treatments that enable a complete cycle of treating food products contained in the moulds 1 to be achieved.

The treating cycle starts with removing, for example from a cold-storage room that is not shown, by an operator 22 of a mould 1.

The tubular elements 3 of the mould 1 removed from the cold-storage room contain the food products that have been pressed in a previous treating cycle in a mould closing station 301 of the plant 100 before being deposited in the cold-storage room.

The mould 1 removed from the cold-storage room has a closed configuration C, that is adopted at the end of the operations undergone in the mould closing station 301 of a previous treating cycle and illustrated for example with reference to the lower mould element 2 of the mould 1 in Figure 1.

In the closed configuration C, the rods 7 and the pressing elements 5 of the mould elements 2 are inserted inside the tubular elements 3, in particular, the pressing elements 5 abut on the pressed food products pressed there and, as disclosed previously, remain blocked abutting on the blocking elements 11.

In the mould 1 removed from the cold-storage room, all the mould elements 2 are in the closed configuration C.

The mould 1, by carriage means 23 guided by the operator 22, is taken at an initial part 24 of the plant 100 to be then arranged resting on conveying means 25.

The conveying means 25 may comprise conveyor belts or other known devices for automatic conveying of objects which, once they have been driven by motor means, for example comprising step motors, enable the objects arranged above to advance along the advancing direction D to move from one to the other of the stations that make up the food products treating plant 100.

Owing to the conveying means 25, the mould 1 reaches a mould opening station 201 of the plant 100, where the apparatus for opening moulds 200 interacts with the mould 1 in order to open the mould 1 and thus able the mould elements 2 to move from the closed configuration C to an open configuration A.

In the open configuration A, shown with reference to the mould elements 2 located above the lower mould element 2 of the mould 1 of Figure 1, the rods 7 are substantially extracted from the tubular elements 3 and, consequently, the pressing elements 5 are near the outside of the tubular elements 3, far from the food products.

The apparatus for opening moulds 200 comprises a main frame 26 comprising a supporting structure 27 that is suitable for supporting the conveying means 25 and thus, the mould 1 which, as said previously, is conveyed and supported by the conveying means 25.

The main frame 26 further comprises a main supporting structure 28, comprising a first portal structure 45 and a second portal structure 46.

The first portal structure 45 and the second portal structure 46 are provided with upright means 29, for example two in number respectively, and with crosspiece means 30 that can connect the upright means 29.

The upright means 29 and the crosspiece means 30 can have a substantially parallelpipedon shape with a substantially rectangular section.

The first portal structure 45 can be arranged along the advancing direction D for example upstream of the second portal structure 46.

The upright means 29 can be arranged perpendicularly to a resting plane 31 on which the apparatus for opening moulds 200 is located.

Pedestals 41 are provided by means of which the upright means 29 is connected to the resting plane 31.

Each pedestal 41 can be associated with an upright means 29. The main supporting structure 28 may further comprise further pedestals 42, for example two in number, arranged downstream of the second portal structure 46, with respect to the advancing direction D, said second portal structure 46 being thus interposed between the first portal structure 45 and the further pedestals 42, along the advancing direction D.

The pedestals 41 and the further pedestals 42 are aligned two by two along the advancing direction D, as are the upright means 29 of the first portal structure 45 and the upright means 29 of the second portal structure 46.

The pedestals 41 and the further pedestals 42 arranged on the same side of the machine for opening moulds 200 in a direction that is substantially parallel to the advancing direction D, are reciprocally connected by bar means 39 of a substantially parallelpipedon shape and with a substantially rectangular section.

Further bar means 47 can be provided for connecting the pair of the pedestals 41 of the first portal structure 45 and the pair of further pedestals 42, respectively.

In order to increase the stability on the main frame 26, transverse elements 48 that fix the main supporting structure 28 to the supporting structure 27 can lead away from the bar means 39 and from the further bar means 47.

The transverse elements 48 can be bars having at least one rectangular cross section and a trapezoidal longitudinal section.

The crosspiece means 30 can be arranged parallel to the resting plane 31 and can connect the upright means 29 of the same portal or the upright means 29 of the two portals.

The main frame 26 can further comprise reinforcing elements 32, shown in Figure 4, which are suitable for connecting the upright means 29 to the crosspiece means 30 to bestow a further support and reinforce the main frame 26 of the apparatus for opening moulds 200.

The reinforcing elements 32 can be bars having at least one rectangular section.

The crosspiece means 30 supports driving means 33, which may comprise a reduction gear, which is not shown, and a motor 33a, in particular of the electric and self-braking type. The driving means 33 is arranged almost at the centre of the crosspiece means 30.

The motor 33a of the driving means 33 is provided with a drive shaft 35 that rotates a drive pulley 36, for example arranged near an end of the drive shaft 35.

The drive pulley 36 is rotatable around a first rotation axis B around which the drive shaft 35 also rotates.

The drive pulley 36 drags a belt 37, for example a toothed belt, which is further wound around a driven pulley 38, mounted on a shaft 49 splined on the bar means 39 and rotated around a second rotation axis E.

The first rotation axis B and the second rotation axis E belong to the same plane that is substantially perpendicular to the resting plane 31.

The motor 33a of the driving means 33 thus enables the belt 37 to be moved vertically, i.e. in a manner that is substantially perpendicular to the resting plane 31, from bottom to top or vice versa according to the rotation direction of the drive shaft 35, which, driven by the motor 33a of the driving means 33, moves the drive pulley 36.

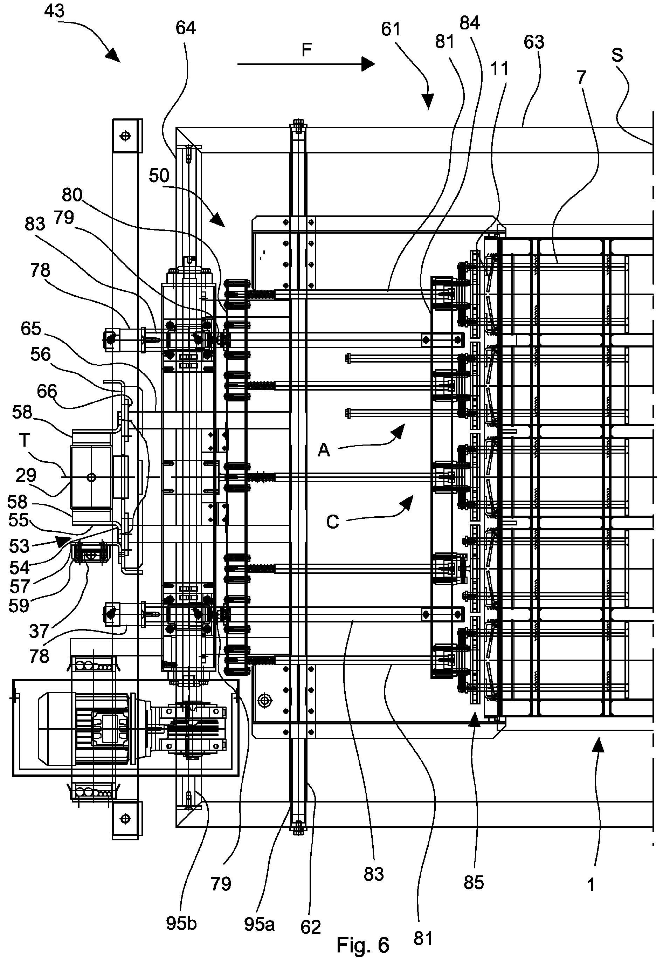

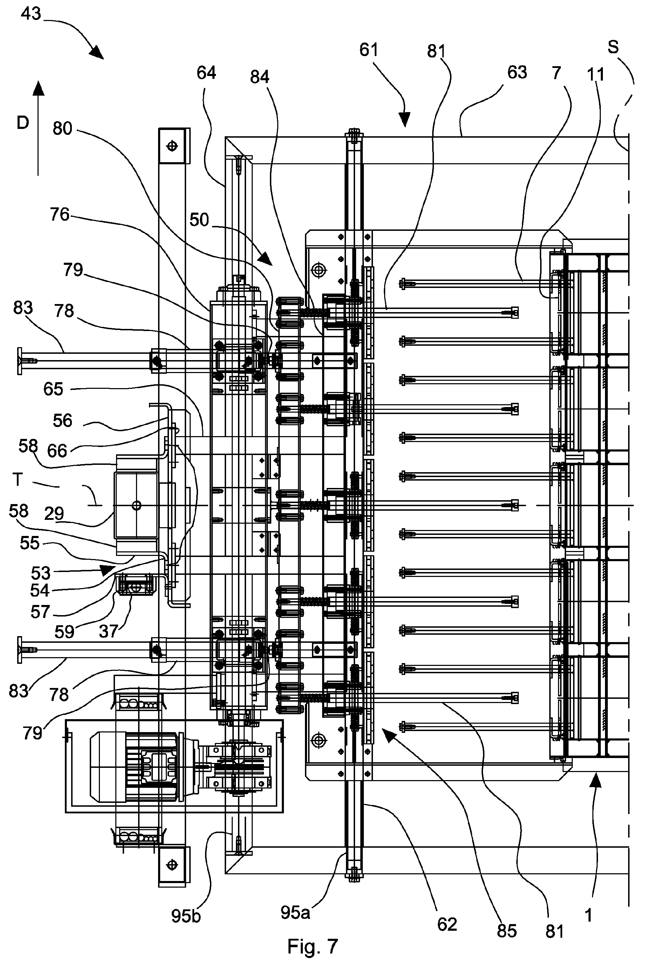

A main plane indicated by line S in Figures 6 and 7 and orthogonal to the plane of Figures 6 and 7 divides the apparatus for opening moulds 200 into two operating zones, a first operating zone 43 and a second operating zone 44, arranged on sides that are opposite said main plane S.

The first operating zone 43 and the second operating zone 44 are substantially symmetrical to the main plane S, and operate, for example, specularly and simultaneously, the first operating zone 43 being shown in detail in Figures 6 and 7.

For the sake of brevity and for reasons of clarity, the structure and the operation of only the first operating zone 43 will be disclosed below, which are substantially the same as those of the second operating zone 44.

The apparatus for opening moulds 200 comprises an extracting device 50, which is suitable for interacting with the rods 7 of the mould 1 in an automated manner, to take the mould 1 from the closed configuration C to the open configuration A, taking the pressing elements 5 from the position abutting on the food product inserted inside each tubular element 3 and taking the pressing elements 5 towards the free ends of each tubular element 3.

The extracting device 50 is movable in a vertical direction, i.e. substantially perpendicularly to the resting plane 31, in the manner which will be explained below.

With reference to Figures 6 and 7, the extracting device 50 comprises a plate 56, arranged near the upright means 29 to connect slidingly the extracting device 50 to the main supporting structure 28 of the apparatus for opening moulds 200, and, in particular, to the upright means 29 of the second portal structure 46.

For this purpose, the plate 56 is connected by fixing means comprising screws and bolts or by welding, to sheet metal means 57, for example "L"-shaped and, for example, two in number. The sheet metal means 57 is in fact arranged in such a manner that a first arm 54 of the "L" is connected to the plate 56 and a second arm 55 is substantially parallel to a side of the upright means 29 of the second portal structure 46, in particular the side substantially perpendicular to the advancing direction D.

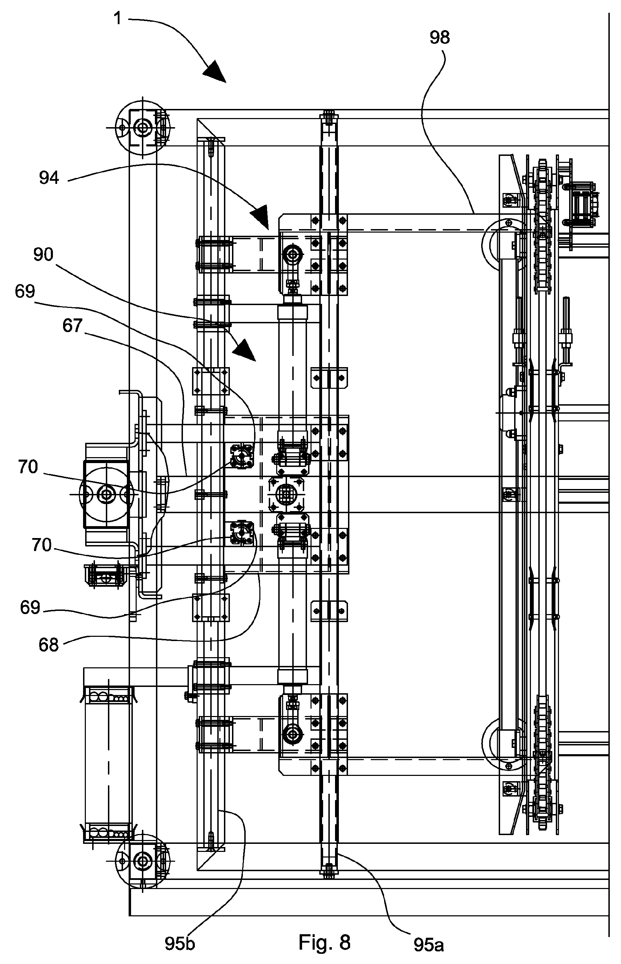

A crosspiece 67, shown partially in Figure 8 and arranged substantially perpendicularly to the advancing direction D reciprocally connects the plate 56 and a corresponding plate that is analogous to the plate 56 provided in the second operating zone 44.

Between one side of the upright means 29 and each of the second arms 55, pad elements 58 of a substantially parallelpipedon shape are interposed and fixed to the second arms 55. The second arms 55 are mounted on the plate 56 in such a manner that the distance between the second arms 55 and the upright means 29 is almost the same as the thickness of the pad elements 58, such that the latter abut against the walls of the upright means 29 of the second portal structure 46.

The pad elements 58, in use, when the extracting device 50 is moved vertically, in fact run by sliding along the walls of each upright means 29 of the second portal structure 46, each upright means 29 of the second portal structure 46 thus constituting a sort of support and guide for the extracting device 50.

The pad elements 58 thus have to be made of any material that is resistant to wear through sliding.

On the plate 56 further sheet metal means 59 can be further mounted by the fixing means or by welding, arranged for supporting plates 60 that are suitable for tightening the belt 37, these further sheet metal means 59 being completely similar in structure and arrangement to each sheet metal means 57, but being situated further from the upright means 29 with respect to the sheet metal means 57.

The plates 60 can have a substantially parallelpipedon shape with a rectangular section.

The further sheet metal means 59 enables the belt 37 to be tightened between a wall thereof and a wall of the plates 60, such as to connect the belt 37 to the plate 56 stiffly.

In this manner, when the belt 37 is moved vertically, from bottom to top, or vice versa according to the direction in which the motor 33a of the driving means 33 rotates the drive shaft 35 and thus also the drive pulley 36, it drags the extracting device 50 in the same direction.

The plates 60 can be two in number, for example if the belt 37 is not closed in a loop but is interrupted and it is thus necessary to fix both the ends thereof.

Alternatively, the plates 60 can be connected directly to the second arm 55 of the sheet metal means 57, without it being necessary to provide the further sheet metal means 59. The second operating zone 44 will comprise the same elements of the first operating zone 43, arranged specularly with respect to the main plane S.

The apparatus for opening moulds 200 further comprises a supporting skeleton 61, which is suitable for further supporting the extracting device 50. The supporting skeleton 61 substantially has the shape of a frame, i.e. it comprises a pair of substantially parallel bars 63 connected, for example, by welding and, near the ends thereof, a pair of further bars 64 substantially parallel to one another and substantially perpendicular to the aforesaid bars 63. Part of the bars 63 and one of the further bars 64 are shown in Figures 6 and 7, whilst the other further bar 64 is not shown inasmuch as it is part of the second operating zone 44.

The supporting skeleton 61 may further comprise still further bars 62, for example two in number, arranged reciprocally parallel, and extending parallel to the advancing direction D. Again, only a still further bar 62 is shown in Figures 6 and 7.

The still further bars 62 are separated by a distance that is less than the distance between the further bars 64, i.e. the still further bars 62 are nearer the main plane S than the further bars 64.

Further reinforcing elements 65 can be provided to connect the supporting skeleton 61 to the plate 56, and thus to the frame 26 of the apparatus for opening moulds 200. In particular, the further reinforcing elements 65 can connect the still further bars 62 to the plate 56, by welding or interposition, between the still further bars 62 and the plate 56, of further plates 66 fixed by fixing means that is not shown in the Figures.

To the further bars 64 a further plate 68 is connected that is arranged substantially perpendicularly to the plate 56 and is shown in Figure 8.

In order to connect the further plate 68 to each of the further bars 64 supporting means is provided that may include platform means, comprising, for example, two platforms 69, as shown in Figure 8, arranged substantially parallel to the resting plane 31 and pillar means mounted on the platforms 69 intended for supporting the further plate 68.

The pillar means may comprise a pillar 70 for each platform 69.

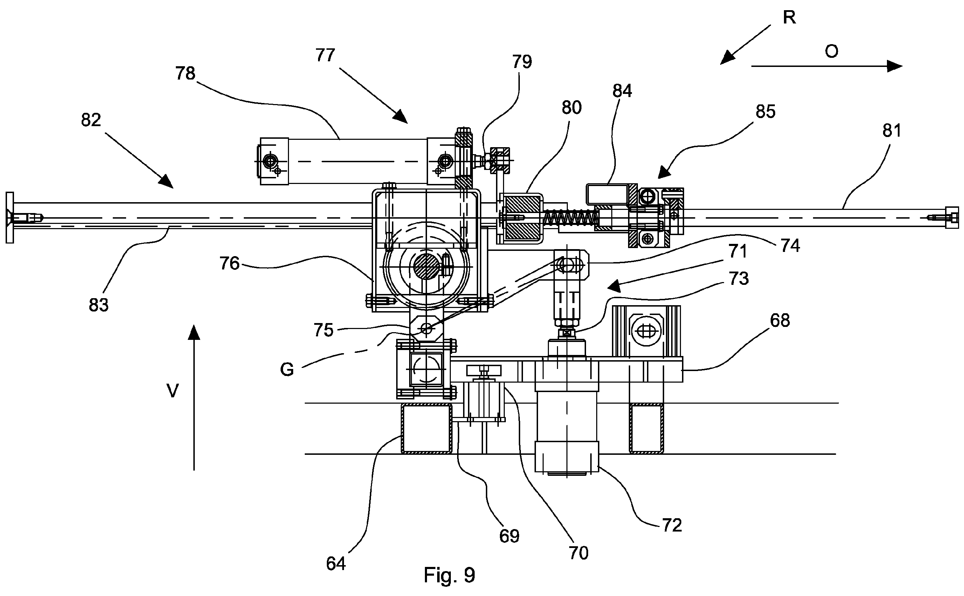

With reference to Figure 9, an enlarged and partial side view of the extracting device 50 is shown in a rest operating configuration R that is adopted when it is not in function.

On the further plate 68 first actuating means 71 is mounted, for example of linear type and acting in a direction that is substantially parallel to a vertical direction V that is perpendicular to the resting plane 31.

The first actuating means 71 may comprise a first cylinder 72, inside which a first piston 73 is slidable, which, in operating configurations of the extracting device 50, is moved to extend along the vertical direction V in such a manner as to emerge from the first cylinder 72 to act on a tiltable support 74 that is suitable for being tilted on a vertical plane by an angle α that is sufficient to enable the extracting device 50 to interact with the rods 7 in the manner which will be explained in greater detail later on in the description.

The tiltable support 74 is pivotable around a third rotation axis G that is substantially parallel to the resting plane 31 and orthogonal to the plane of Figure 9, owing to hinge means 75 arranged for thus enabling the extracting device 50 to tilt by an amount equal to the angle α.

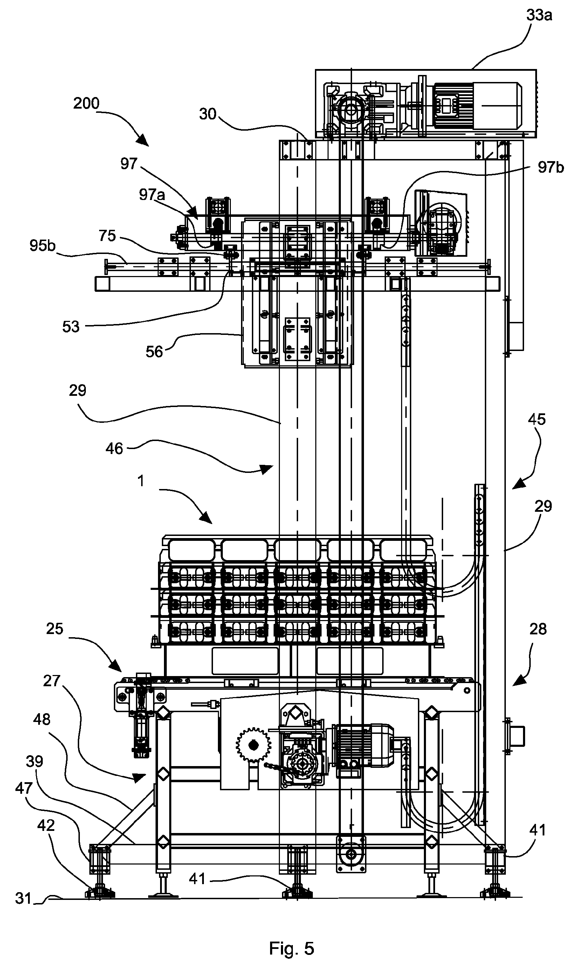

The hinge means 75 is connected, as is visible in Figure 5, on one side to an intermediate element 53, which is in turn connected to the further plate 68.

Above the hinge means 75 and connected thereto, a box body 76 is arranged that has a substantially parallelpipedon shape and extends along the advancing direction D that houses reduction gear means that is not illustrated that is necessary for the operation of the extracting device 50.

The hinge means 75 is thus connected on one side to the further plate 68 and on the other side to the box body 76.

The box body 76 is further arranged to support second actuating means 77, which is also, for example, of linear type and acts in a horizontal direction O substantially perpendicular to the vertical direction V and to the advancing direction D.

The second actuating means 77 can be connected to the box body 76 by welding.

The second actuating means 77 may comprise second cylinders 78, inside each of which a second piston 79 is slidable, which, in operating configurations of the extracting device 50, is moved to extend along the horizontal direction O in such a manner as to extend outside the second cylinder 78 approaching the mould 1.

The second cylinders 78 and the second pistons 79 can be two in number, as shown in Figure 6.

The actuating means 77, in particular the second pistons 79, are connected to first rod means 80 extending along the advancing direction D, to which a plurality of pressure rods 81 is connected, for example in a number that is the same as the tubular elements 3.

In use, the first rod means 80 and thus the pressure rods 81 are moved by the second actuating means 77 to slide along a direction parallel to the horizontal direction O to move to the blocking elements 11 of the mould 1 and, subsequently, to press the blocking elements 11. This causes sliding of the tubular elements 3, of the rods 7 and of the pressing elements 5, in particular sliding outside the tubular elements 3.

The pressure rods 81 may have a cylindrical shape.

The extracting device 50 further comprises third actuating means 82 acting in a direction substantially parallel to the horizontal direction O. Each of the third actuating means 82 is suitable for engaging with the hookable portion 13 of each rod 7.

The third actuating means 82 may comprise a rack 83, provided with a lower toothing that is couplable for example with toothed wheel means 97 located inside the box body 76, shown in Figure 5, which is rotated by further driving means 89, illustrated in Figure 6, which may comprise a reduction gear, which is not shown, and a motor, in particular of the electric and self-braking type.

The motor of the further driving means 89 is provided with a shaft that transmits motion to the aforesaid toothed wheel means 97.

The toothed wheel means 97 may comprise a pair of toothed wheels 97a and 97b.

By rotating this toothed wheel means 97, the rack 83 moves towards or away from the mould 1, depending on the rotation direction of the toothed wheel means 97.

A plurality of racks 83, for example two, can be provided, as shown in Figures 6 and 7.

The racks 83, in use, are inserted inside the box body 76. Suitable through openings must therefore be provided that are arranged in a casing of the box body 76 to permit the passage of the racks 83.

To an end of the racks 83 nearer the plane II second rod means 84 is connected, which also extends along the advancing direction D, to which a plurality of gripping means 85 is connected, for example in a number that is the same as the tubular elements 3. In particular, each gripping means 85, in use, interacts with the hookable portions 13 of the pairs of rods 7 of each tubular element 3, to produce sliding of the rods 7 to the outside of each tubular element 3.

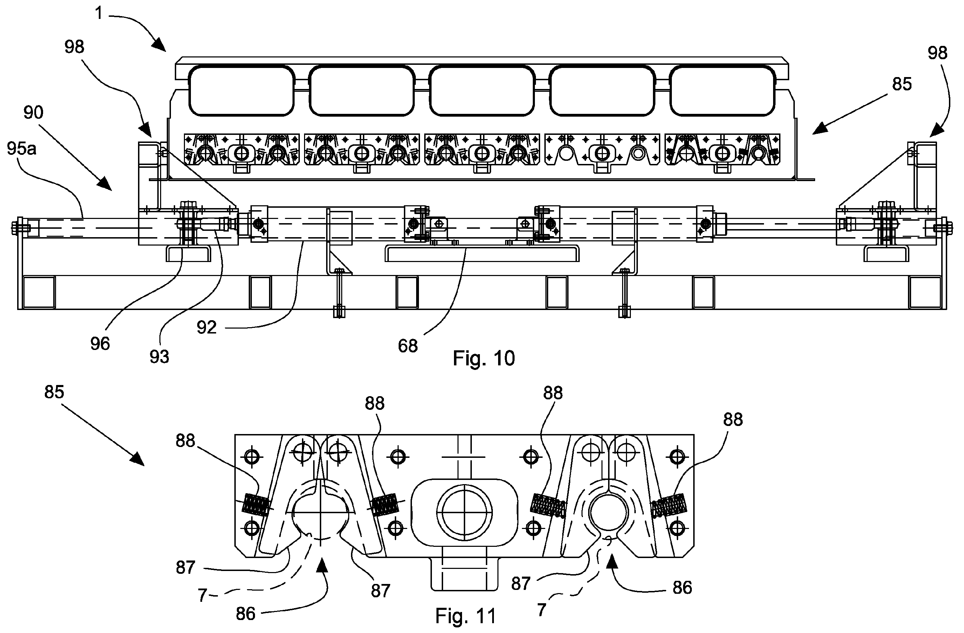

With reference to Figures 10 and 11, each gripping means 85 comprises a pair of elastic jaws 86, each of which is intended, in use, for hooking a hookable portion 13 of each rod 7.

The elastic jaws 86 comprise a pair of clamping elements 87 facing one another and hinged at one end in such a manner as to be able to rotate by moving away or towards one another. In this manner it is possible to increase a distance between the pair of clamping elements 87, by passing from a rest condition (shown in the elastic jaw 86 on the right in Figure 11), which the clamping elements 87 are at least partially in contact, in one operating position (shown in elastic jaw 86 on the left in Figure 11) in which the clamping elements 87 are reciprocally moved away from one another.

In use, this enables a rod 7, the cross section of which is shown in Figure 11 by a dashed line, to be able to be received between the clamping elements 87.

The elastic jaws 86 are provided with elastic means 88, for example comprising springs, that enable the clamping elements 87 to keep the rod 7 blocked once the rod 7 has been interposed between the clamping elements 87.

Third rod means can be provided, which is not illustrated, which is fixed to the frame 26 of the apparatus for opening moulds 200 in such a manner as to overlook the second rod means 84 and thus the gripping means 85. The aforesaid third rod means may comprise a bar extending along the advancing direction D, on which a detaching element is pivoted that is for example "L"-shaped. The detaching element may rotate around the third rod means, when driven by fourth actuating means, to move from a rest position in which the detaching element is lifted, to an operating position in which the detaching element rotates around the rod and suddenly moves to a lowered position to interact with the gripping means 85. The blow caused to the gripping means 85 by the detaching element enables the elastic jaws 86 to release the rods 7 once the gripping means 85 has extracted the rods 7 from the tubular elements 3, in the manner explained in detail further on in the description. This enables it to be avoided that the rods 7 are subjected to mechanical stress and are damaged.

The apparatus for opening moulds 200 further comprises a centring device 90, shown in Figures 8 and 10, arranged for interacting with the mould 1 in order to align the mould 1 when it is taken from the conveying means 25 near the apparatus for opening moulds 200 to the apparatus for opening moulds 200. In this manner, all the components of the extracting device 50 are aligned, according to a direction that is perpendicular to the advancing direction D, with the components of the mould 1 with which they have to interact.

The centring device 90 has a transverse median plane T than may coincide with that of the apparatus for opening moulds 200.

The centring device 90 is provided with fifth actuating means 91, which may comprise a pair of third cylinders 92, inside each of which a third piston 93 is slidable. The third pistons 93 are fixed on the further plate 68, in such a manner that the third pistons 93 act in reciprocally opposite directions.

The free end of each of the third pistons 93 is secured to further supporting means 94 that are slidably coupled with guiding means 95 intended for accompanying and supporting the movements of the fifth actuating means 91.

The guiding means 95 may comprise rods 95a, 95b, that are respectively fixed to the still further bars 62 and to the further bars 64.

The free end of each of the third pistons 93 is connected to a centring element 98, that is arranged perpendicularly to the resting plane 31.

The centring elements 98, and thus the fifth actuating means 91, must be placed at a distance that is greater than a length of each of the tubular elements 3.

In use, the centring elements 98 create a sort of connection for the mould 1, inasmuch as they grasp the mould 1, such as to block the mould 1 between themselves.

The operation of the apparatus for opening moulds 200 will be illustrated below.

When the mould 1, by means of the conveying means 25 driven by commands sent by a processing and control unit that is not illustrated, reaches the apparatus for opening moulds 200, the centring device 90 is first activated, to align the mould 1 on the apparatus for opening moulds 200.

The third pistons 93 are in an extracted position (shown with reference to a third piston 93 to the right in Figure 10) and are moved to slide to the interior of respective third cylinders 92, such as to adopt a retracted position (shown with reference to a third piston 93 on the left in Figure 10). Consequently, also the centring elements 98 are moved in the same direction by an amount that is such that the centring elements 98 are brought to abut against the frame 6 of the mould 1.

If the third pistons 93 that drive the centring elements 98 to move against the frame 6 of the mould 1 are extended for a length that is different from one another, this means that the centring device 50 is not centred with respect to the mould 1.

Consequently, the extracting device 50 has to be driven by the third pistons 93 to move along the guiding means 95 to align itself with respect to the mould 1. The value of the movement of the extracting device 50 is established by the processing and control unit in function of the reciprocal difference in extent of the third pistons 93 when they take the centring elements 98 against the frame 6 of the mould 1 and of the width of the mould 1.

Otherwise, i.e. if the third pistons 93 that drive the centring elements 98 to move against the frame 6 of the mould 1 are extended for the same length, it means that the centring device 50 is centred with respect to the mould 1. Once the apparatus for opening the moulds 200, and, in particular, the extracting device 50, has been centred with respect to the mould 1, the fifth actuating means 91 moves the centring elements 98 away from the frame 6 of the mould 1.

At this point, the driving means 33 is driven by the processing and control unit to rotate the drive pulley 36 and thus move the extracting device 50 dragged by the belt 37.

The extracting device 50, can, for example, be moved vertically, i.e. in a direction that is substantially perpendicular to the resting plane 31 and away from the resting plane 31. The extracting device 50 is moved by an amount such that the pressure rods 81 thereof are at the same height as the rods 7 of the lower mould element 2 of the mould 1.

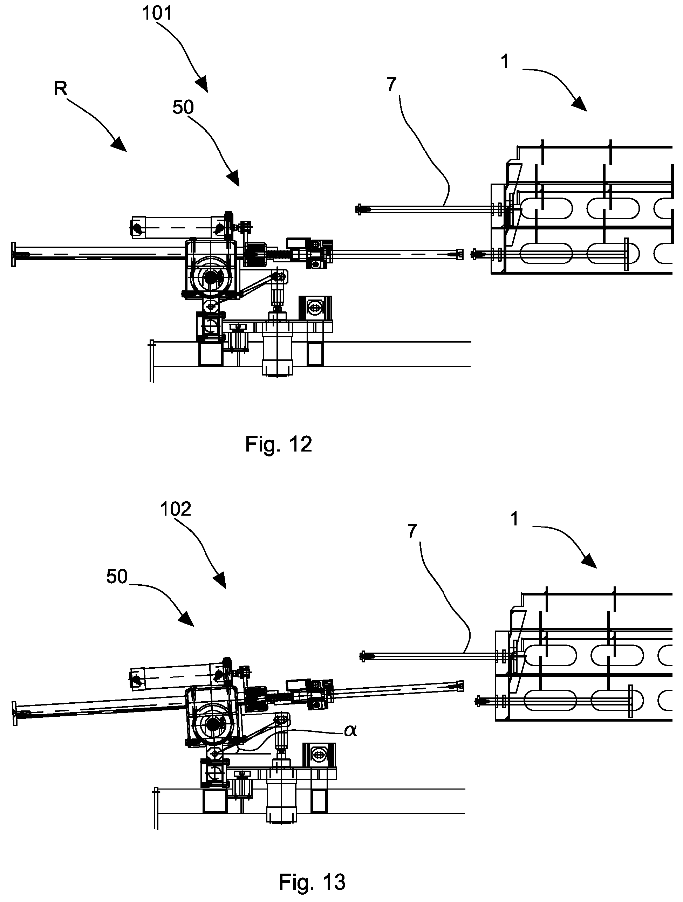

In Figures 12-19 there are shown, in succession, the operating configurations that the extracting device 50 adopts to disconnect the rods 7 from the tubular elements 3. In a first operating configuration 101, shown in Figure 12, the extracting device 50 is in the rest configuration R. Subsequently, as shown in a second operating configuration 102 in Figure 13, the first actuating means 71 drives the first piston 73 to extend along the vertical direction V. In this manner, the tiltable support 74 is rotated around the third rotation axis G by the angle α. At the same time, the rack 83 (and the gripping means 85 connected thereto by the second rod means 84) and the pressure rods 81 are tilted by the same angle α.

Simultaneously, the motor of the further driving means 89 rotates the toothed wheel means 97 splined on the drive shaft thereof and arranged inside the box body 76. The toothed wheel means 97 engages with the lower toothing of the rack 83 in such a manner that the rotation of the toothed wheel means 97 is converted into linear motion of the rack 83, in particular a linear motion that, in this step moves the rack 83 to the mould 1.

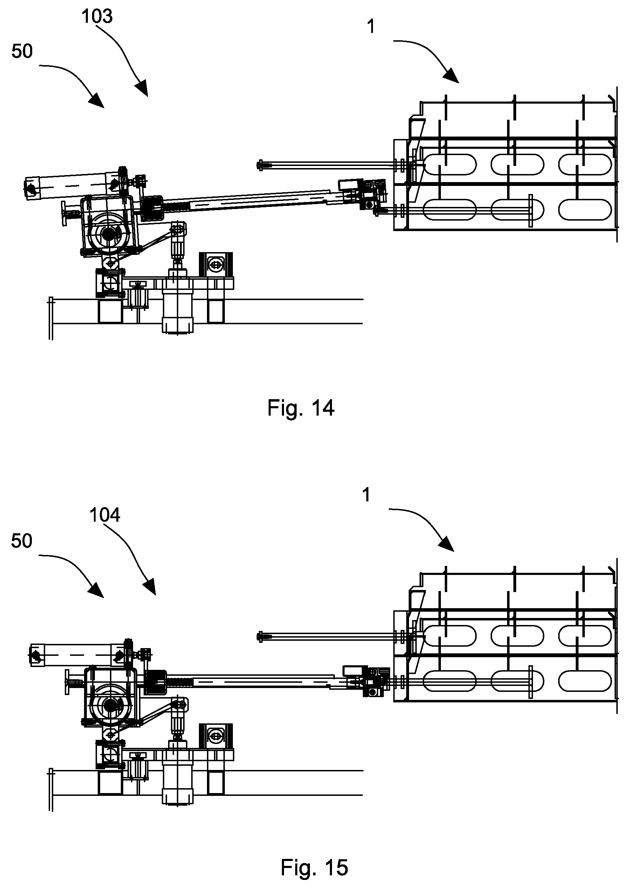

Together with the rack 83, the gripping means 85 moves with the same motion until it is near and in a position above the hookable portion 13 of the rod 7 (third operating configuration 103 of Figure 14).

At this point the first piston 73 is driven to retract, such that the tiltable support 74 is rotated again and returns to the position of the first configuration 101, as illustrated in a fourth operating configuration 104 in Figure 15.

Again, the movement of the tiltable support 74 is connected to that of the gripping means 85 and of the pressure rods 81, and they are thus lowered. In particular, whilst the gripping means 85 is lowered, the clamping elements 87 of the elastic jaws 86 of the gripping means 85 widen, interacting with the rods 7, owing to the force due to the lowering movement and owing to the elastic means 88. In this manner, the gripping means 85 grasps the rods 7.

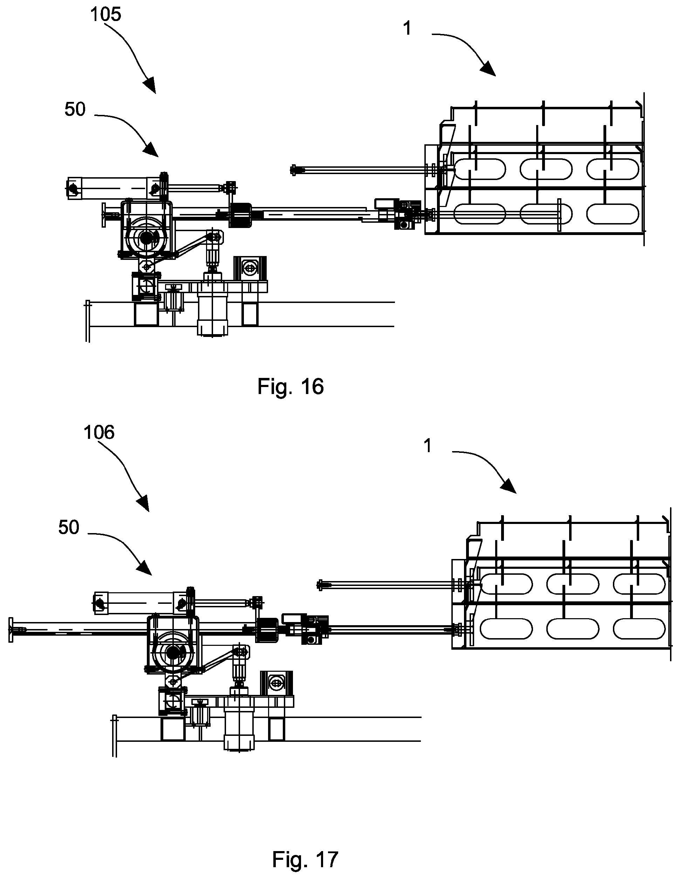

Subsequently, the second actuating means 77 is driven. The second piston 79 is extracted from the second cylinder 78 and moved to the mould 1. In this manner, also the first rod means 80 is moved to the mould 1 and thus the pressure rods 81, as shown in a fifth operating configuration 105 in Figure 16, until they press the blocking elements 11 of the mould 1.

By pressing the blocking elements 11, the pressure rods 81 enable the rods 7 to be able to slide inside the tubular elements 3. The blocking elements 11, in fact, act on the rods 7 of the pressing elements 5, so as not to hinder the sliding thereof inside the tubular elements 3, but to prevent the sliding thereof outside the tubular elements 3. Once the blocking elements 11 have been pressed by the pressure rods 81, the shaft of the motor of the further driving means 89 changes rotation direction and subsequently the same thing occurs for the toothed wheel means 97. The rack 83 is thus moved away from the mould 1, as shown in a sixth operating configuration 107 in Figure 17. This also shows that also the gripping means 85 is subjected to a direct force away from the mould 1. This force makes the gripping means 85 act against the hookable portion 13 of the rod 7 and, in particular, with the protruding element 14. The protruding element 14 is thus pressed by the gripping means 85 and the rod 7 is consequently made to slide towards the exterior of the tubular element 3.

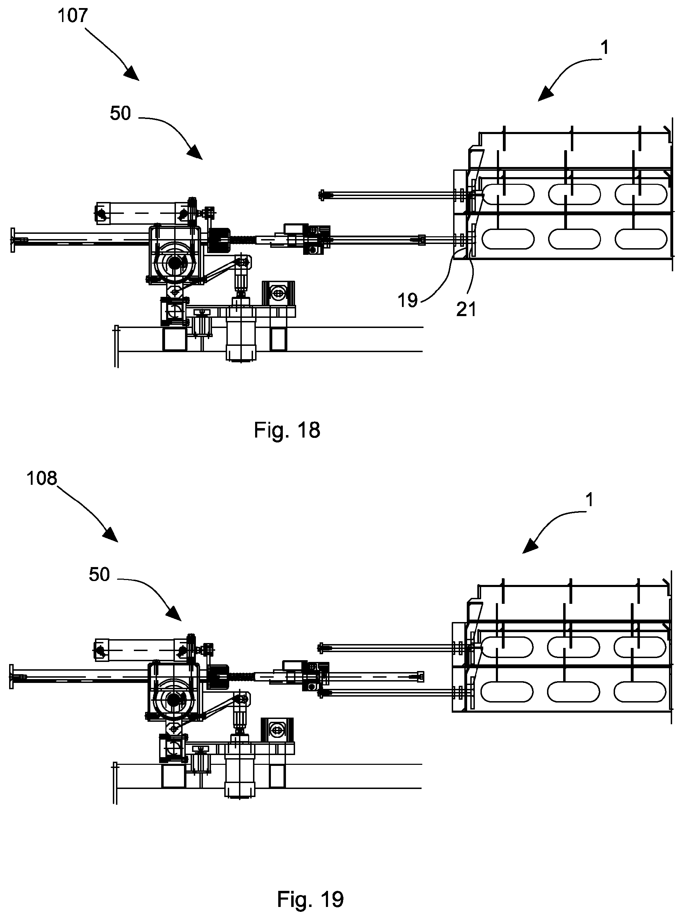

Subsequently or simultaneously, also the second pistons 79, and thus the pressure rods 81, are moved to retract as shown in a seventh operating configuration 107 in Figure 18.

The operation of extracting the rod 7 is conducted simultaneously for all the tubular elements 3 that make up a mould element 2.

Once the pushing surface 21 of the pressing element 5 approaches the wall element 19, which is the equivalent of saying that the rod 7 is extracted from the tubular element 3, (eighth operating configuration 108 of Figure 19), the extracting device 50 is moved to move vertically until the gripping means 85 is freed from the rods 7 and can be ready to extract the rods 7 of a further mould element 2, positioned immediately above the mould element 2 in which the rods 7 have just been extracted.

Simultaneously to the vertical movement of the extracting device 50 to free itself from the rods 7 in the eighth operating configuration 108, the detaching element, if present, is rotated around the third rod means, so as to move suddenly to a lowered position in which it interacts by hitting the gripping means 85. The blow caused by the detaching element on the gripping means 85 prevents the rods 7 from remaining blocked between the elastic jaws 86 whilst the extracting device 50 moves vertically, which would subject the rods 7 to mechanical stress that could deform the rods 7 for example by flexing the rods.

The extracting device 50 takes on the aforesaid operating configurations 101-108 shown in Figures 12-19 for as many times as there are mould elements 2 that form the mould 1.

In Figure 6, there is shown a portion of mould 1 situated in the first operating zone 43 in which part of the rods 7, for example those of the mould element 2 located in a lower position in the mould 1, have been extracted and are in the open configuration A and part of the rods 7, for example those of the mould element 2 located immediately above the mould element 2 located in a lower position in the mould 1, still have to be extracted and are in the closed configuration C.

In Figure 7 there is shown a portion of mould 1 situated in the first operating zone 43 in which all the rods 7 have been extracted.

At the end of the operation of extracting all the rods 7 of the mould 1, the extracting device 50 is moved to the resting plane 31 to adopt the position of the first operating configuration 101 of Figure 12.

The second operating zone 44 operates in the same manner and, for example, simultaneously with the first operating zone 43, such that the rods 7 of the same mould element 2 are extracted simultaneously.

The apparatus for opening moulds 200 is managed and controlled by a central unit, which gives the commands to command the apparatus for opening moulds 2.

After all, the apparatus for opening moulds 200 is completely automated and does not require special personnel to perform the operations disclosed above.

The apparatus for opening moulds 200 thus enables the operations for opening each mould element 2 to be accelerated, i.e. the operations for extracting the rods 7, and further enables significant financial savings to be made.

When all the rods 7 of all the mould elements 2 are extracted, the mould 1 is conveyed by the conveying means 25, following the advancing direction D, to an unstacking station 401, where the mould elements 2 are unstacked and are thus removed from the mould 1.

Once the rods 7 have been extracted from the tubular elements 3 in the mould opening station 201 it is in fact possible to separate the various mould elements 2 that make up the mould 1 taken from the cold-storage room.

In this unstacking station 401, which is shown schematically in Figure 3, an unstacking apparatus is provided comprising a supporting structure provided with arm means arranged on only one side of the conveying means 25 or on both sides of the conveying means 25 that conveys the mould 1. In the latter case, the arm means acts in the same way as in the case in which it is provided on only one side, but in a specular manner.

The arm means comprises a plurality of arm elements with a substantially parallelpipedon shape which, when the mould 1 reaches the unstacking station 401, is driven by suitable actuating means to move linearly along a direction that is perpendicular to the advancing direction D to move below a lower portion 99 (shown in Figure 1) located in a lower zone of the frame 6 of the mould element 2 immediately above the lower mould element 2 of the mould 1.

The arm means is then driven to move vertically; in this manner, the mould 1, except the lower mould element 2, is lifted, whilst the lower mould element 2 remains in contact with the conveying means 25. The mould elements 2 are in fact superimposed in the mould 1 without any mechanical fixing between the various mould elements 2 and thus, by lifting the mould 1 except the lower mould element 2, the latter is separated from the rest of the mould elements 2. The mould element 2 removed from the mould 1 is then transferred by the conveying means 25 to a product removal station 501 after the unstacking station 401 along the advancing direction D.

When the mould element 2 has moved away from the unstacking station 401, at least for a distance that is equal to the width of the mould element 2, the arm means is moved to relower the mould 1 in contact with the conveying means 25. Subsequently, the arm means is moved below the lower portion 99 of the mould element 2 immediately above the new lower mould element 2 of the mould 1.

The aforesaid operations for unstacking the mould 1 are repeated by the arm means for a number of times that is the same as the number of mould elements 2 that make up the mould 1 as removed by the cold-storage room less one.

The conveying means 25 transfers the mould elements 2 that have just been disassembled one by one to the product removal station 501.

In the product removal station 501, the pressed food products contained inside the tubular elements 3 of each of the mould elements 2 are expelled from the mould element 2. For this purpose, in the product removal station 501 a further supporting structure is provided that is equipped with removing means arranged to the side of the conveying means 25 that conveys the mould 1. The aforesaid removing means, which is not illustrated, can be provided on only one side of the conveying means 25, or on both sides. In this latter case, the removing means acts in the same way as in the case in which it is provided on only one side, but in a specular manner.

The removing means comprises a plurality of removing elements, each of which is provided with a rod fixed to a pushing surface that are slidingly inserted inside each free end of the tubular elements 3 where the pair of pressed food product units is contained, to push the latter to the respective opposite free ends of the tubular elements 3. Owing to the fact that the mould element 2 has been separated from the other mould elements 2 of the mould 1, the food product units can slide inside the tubular element 3 under the pushing action exerted by the removing means. The number of removing elements is the same as the number of tubular elements 3 of each mould element 2.

The expelled food product units are gathered in suitable containers and can be subseqeuntly sliced by high-speed industrial slicing machines.

Once the food product units have been expelled, the removing means is removed from the tubular elements 3 and the mould element 2 can be transferred to a cleaning station 601 after the product removal station 501.

In the cleaning station 601, the mould elements 2 are subjected to a plurality of processes suitable for removing any residues of the food products that can remain on the walls of the tubular elements 3.

In particular, the mould elements 2 are first washed using a fluid, for example water vapour, then they are rinsed, and finally dried by air jets.

Owing to the high temperatures to which the water vapour is subjected, the mould elements 2 are sterilised so as to eliminate any microorganisms present that are harmful to people.

At the end of the processes undergone in the product removal station 501 and in the cleaning station 601, each mould element 2 is clean and empty of the food product, such as to be ready to be filled again with other food product units.

The mould elements 2 are then moved one by one by the conveying means 25 along the advancing direction D to a filling station 701. In the filling station 701, the mould elements 2 are stopped such that, for example an operator, can slide a new food product inside the tubular elements 3, in particular a ham, or a cut of meat, which has not yet been pressed or shaped. For example, two food product units can be inserted.

Once each mould element 2 has been filled, it is transferred to a stacking station 801, where the mould elements 2 are stacked and thus superimposed on one another to form a new mould 1.

This stacking station 801 comprises a stacking apparatus that is structurally completely analogous to the unstacking apparatus of the unstacking station 401.

In this case, when a mould element 2, into which the food products in the filling station 701 have been inserted, reaches the stacking station 801, it is stopped by suitable blocking means. At the moment in which a further mould element 2 approaches the stacking station 801, the plurality of arm elements is driven by suitable actuating means to move linearly along a direction that is perpendicular to the advancing direction D to move below the lower portion 99 of the mould element 2 blocked in the stacking station 801.

The arm means is then driven to move vertically; in this manner, it lifts the mould element 2 and simultaneously the further mould element 2 is taken by the conveying means 25 at the stacking station 801. The arm means then relowers the lifted mould element 2 and superimposes it on the further mould element 2. The pressing elements 5 of the mould element 2 are inserted into the openings 8 of the tubular elements 3 of the further mould element 2. In this manner, the two mould elements 2 are assembled and make up the mould 1.

Again, when a still further mould element 2 approaches the stacking station 801, the plurality of arm elements is driven by suitable actuating means to move linearly along a direction that is perpendicular to the advancing direction D to go below the lower portion 99 of the lower mould element 2 that forms the mould 1.

The arm means is then driven to move vertically; in this manner, it lifts the mould 1 and simultaneously the still further mould element 2 is taken at the stacking station 801. The arm means then relowers the lifted mould 1, and superimposes the lifted mould 1 on the still further mould element 2. The pressing elements 5 of the lower mould element 2 of the mould 1 are inserted into the openings 8 of the tubular elements 3 of the still further mould element 2. In this manner, another mould element 2 is added to the mould 1.

The aforesaid manoeuvres for stacking the mould elements 2 and thus forming the final mould 1 are repeated by the arm means for a number of times that is equal to the number of mould elements 2 desired to make up the mould 1 less one. Once the mould 1 has been assembled with the desired number of mould elements 2, the mould 1 is moved by the conveying means 25 along the advancing direction D to be transferred to a mould closing station 301 of the plant 100, where the apparatus for closing moulds 300 interacts with the mould 1 in order to close the mould 1 and thus enable the mould elements 2 to move from the open configuration A to the closed configuration C. This enables the product units inserted into the tubular elements 3 of each mould element 2 to be pressed and shaped, the product units assuming a substantially parallelpipedon shape, the section of which copies that of the tubular elements 3.

The apparatus for closing moulds 300 comprises a frame element 302 provided with a supporting element 303 that is suitable for supporting the conveying means 25 and, thus, the mould 1.

The frame element 302 further comprises a load-bearing structure 304, which includes a first portal element 305 and a second portal element 306.

The first portal element 305 and the second portal element 306 are provided with upright elements 307, for example respectively two in number, and with transverse elements 308 that may connect the upright elements 307.

The upright elements 307 and the transverse elements 308 can be of substantially parallelpipedon shape with a rectangular section.

The first portal element 305 can be arranged along the advancing direction D for example upstream of the second portal element 306.

The upright elements 307 can be arranged perpendicularly to a supporting plane 328 on which the apparatus for closing moulds 300 is located that may coincide with the resting plane 31.

Pedestal elements 309 can be provided by means of which the upright elements 307 are connected to the supporting plane 328.

Each pedestal element 309 can be associated with an upright element 307. 20,22

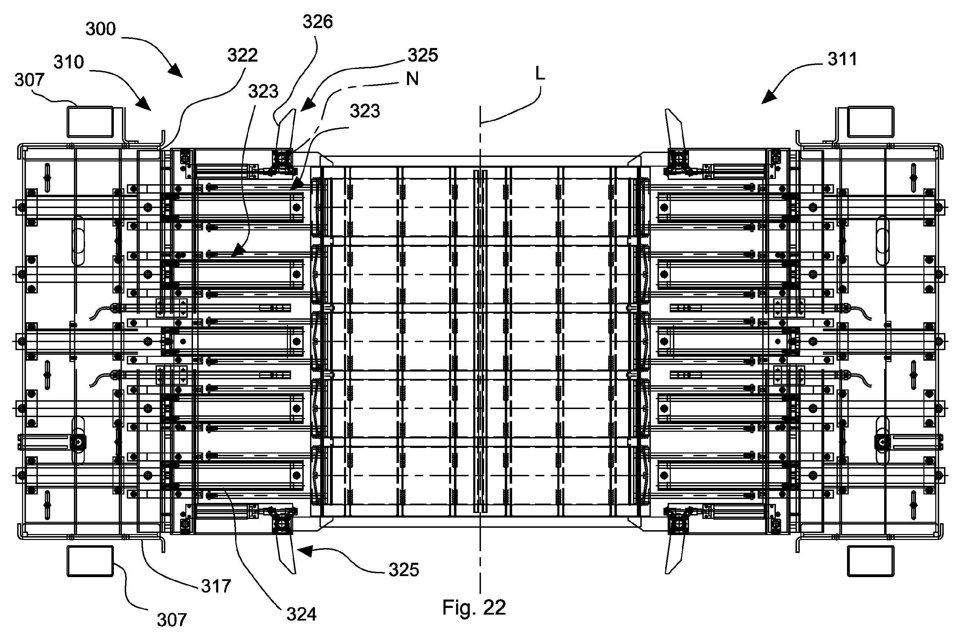

A plane that is indicated by line L in Figures 20,22 and is orthogonal to the plane of Figures 20, 22 divides the apparatus for closing moulds 300 into two operating areas, a first operating area 310 and a second operating area 311, arranged on sides that are opposite with respect to said plane L.

The first operating area 310 and the second operating area 311 are substantially symmetrical with respect to the plane L, and operate, for example, specularly and simultaneously, the first operating area 310 being shown in detail in Figure 22.

For the sake of brevity and for reasons of clarity the structure and operation of only the first operating area 310, which are substantially the same as those of the second operating area 311, will be disclosed below.

The transverse elements 308 support movement means 312, which may each comprise a reduction gear and a motor 312a, in particular of the electric and self-braking type.

The motor 312a of the movement means 312 is provided with drive shaft means, which is not illustrated, which rotates a drive pulley element 313, for example arranged near an end of the transverse elements 308.

The drive pulley element 313 is rotatable around a rotation axis M around which the drive shaft means also rotates.

The drive pulley element 313 drags a belt element 315, for example a toothed belt element, which is further wound around a driven pulley element 314, connected to the upright means 307 by a connecting element 318, which has a plate-shaped structure.

The rotation axis M can be substantially parallel to the advancing direction D and orthogonal to the plane of Figure 20.

The motor 312a of the movement means 312 thus enables the belt element 315 to be moved vertically, i.e. in a manner that is substantially perpendicular to the supporting plane 328, from bottom to top or vice versa according to the rotation direction of the drive shaft means, which, driven by the motor 312a of the movement means 312, moves the drive pulley element 313.

The apparatus for closing moulds 300 comprises a pushing device 316, which is suitable for interacting with the pushing surface 21 of the pressing element 5 in an automated manner, in order to push each pressing element 5 inside each tubular element 3 and thus to compress the food product contained therein. In this manner, the mould 1 moves from the open configuration A to the closed configuration C.

The pushing device 316 is movable in a vertical direction, i.e. substantially perpendicularly to the supporting plane 328, in the manner that will be disclosed below.

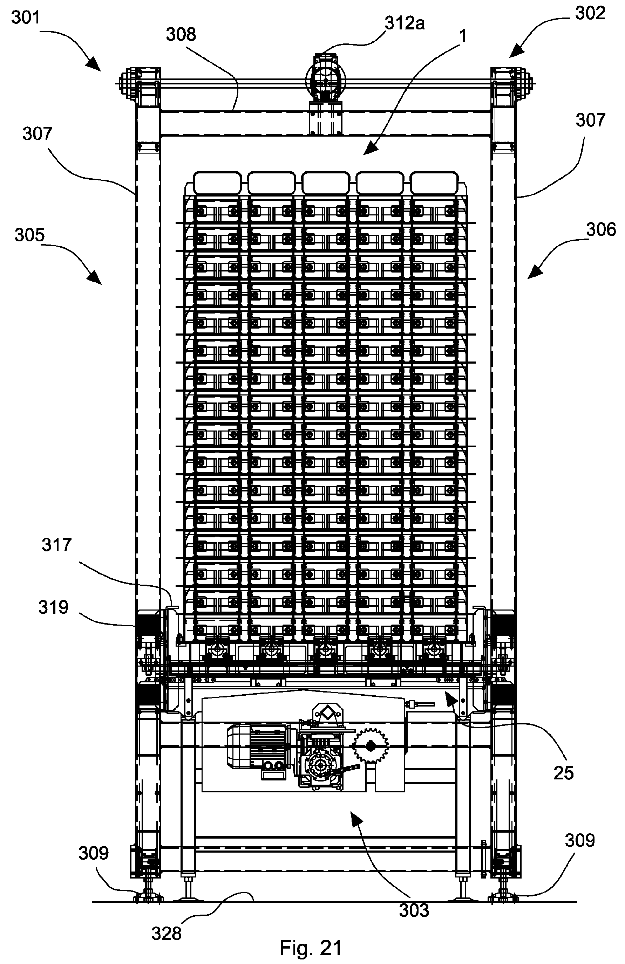

With reference to Figure 20-22, the pushing device 316 comprises plate elements 317, for example in a number that is the same as the upright elements 307 and are arranged near each one thereof, to connect slidingly the pushing device 316 to the load-bearing structure 304 of the apparatus for closing moulds 300, and, in particular, to the upright elements 307.

For this purpose, first pad means 319 is fixed to each plate element 317, the first pad means 319 is arranged parallel to the plate element 317, has a substantially parallelpipedon shape with a rectangular section, which contacts a side of the upright elements 307.

Second pad means 320 and third pad means 321 are also provided, which also have a substantially parallelpipedon shape with a rectangular section, arranged perpendicularly to the plate element 317 and fixed stiffly on one side thereto, to contact other sides of the upright elements 307, respectively the side that is nearest and the side that is furthest away from the plane L.

The first pad means 319, the second pad means 320 and the third pad means 321, in use, when the pushing device 316 is moved vertically, in fact, run by sliding along the walls of each upright element 307, each upright element 307 thus constituting a sort of support and guide for the pushing device 316. The first pad means 319, the second pad means 320 and the third pad means 321 thus have to be made of any material that is resistant to wear by sliding.

The third pad means 321 is connected by fixing elements such as screws and bolts that are not illustrated, to the belt element 315, which is thus stiffly connected to the plate element 317.

In this manner, when the belt element 315 is driven to move vertically from bottom to top or vice versa according to the direction in which the motor 312a of the movement means 312 rotates the drive shaft means and, thus also the drive pulley element 313, the belt element 315 drags the pushing device 316 in the same direction.

Each pair of plate elements 317 of the two operating areas is reciprocally connected by a supporting rod 322, with a parallelpipedon shape with a rectangular section, arranged for supporting the pushing device 316.

In particular, the supporting rod 322 supports a plurality of pushing elements 323, for example in a number that is the same as the tubular elements 3, having a hollow parallelpipedon shape and extending in a direction substantially perpendicular to the advancing direction D. Each pushing element 323 houses, internally, pushing rods 324, for example four in number, which, in use, are moved by driving elements which are not illustrated, to move linearly along a direction that is perpendicular to the advancing direction D to push the pushing surface 21 of the pressing elements 5, which is contactable through the through openings 20.

The driving elements may comprise hydraulic cylinders.

The apparatus for closing moulds 300 further comprises a blocking device 325, shown in Figure 22.

The blocking device 325 is arranged for interacting with the mould 1 in order to align the mould 1, when the mould 1 is taken by the conveying means 25 near the apparatus for closing moulds 300, to the apparatus for closing moulds 300, and to block the mould 1 in a fixed position. The centring operation is necessary to ensure that all the components of the pushing device 316 are aligned according to a direction that is perpendicular to the advancing direction D, with the components of the mould 1 with which they have to interact. Two blocking devices 325 can be arranged for each operating area, as illustrated in Figure 22, which operate reciprocally simultaneously and in a specular manner with respect to the plane L.

The blocking device 325 is connected on one side to the pushing rod 324, such as to be movable vertically together with the pushing device 316.

On the other side, the blocking device 325 comprises a hook element 326 arranged for hooking laterally the frame 6 of the mould 1.

The hook element 326 is pivoted on the blocking device 325 such as to be rotatable around another rotation axis N, which is perpendicular to the supporting plane 328 and to the plane of Figure 22, so as to pass from a rest position in which the hook element 326 is far from the mould 1, to an operating position in which the hook element 326 contacts the mould 1 and, in particular, is inserted into an opening element 327, so as to hook onto the frame 6 of the mould 1. The combined action of the blocking devices 325 thus enables the mould 1 to be centred with respect to the apparatus for closing moulds 300 and enables the mould 1 to be blocked in a position that enables the pushing rods 324 to interact with the pushing surfaces 21.

The operation of the apparatus for closing moulds 300 will be illustrated below.

The mould 1, after being assembled in the stacking station 801, is transferred by the conveying means 25, driven by suitable commands sent by the processing and control unit, at the mould closing station 301.

At this point, the motor 312a of the movement means 312 is driven by the processing and control unit to rotate the drive pulley element 313 and thus move the pushing device 316, dragged by the belt element 315 and the blocking device 325.

The pushing device 316, can be moved vertically, i.e. in a direction that is substantially perpendicular to the supporting plane 328, for example, away from the supporting plane 328. The pushing device 316 is moved by an amount that is such that the pushing rods 324 thereof are at the same height as the portions of through openings 20, of the lower mould element 2 of the mould 1, free of the blocking elements 11.

The blocking device 325 is then driven and the hook element 326 hooks and blocks the mould 1.

The driving elements then drive the pushing rods 324 to approach the mould 1. When each of them comes into contact with the corresponding pushing surface 21, the pushing rods 324 exert a push on the latter that is such as to slide each pressing element 5 inside the tubular element 3 by a set amount, such as to press the food product units inserted inside the tubular elements 3 in the filling station 701. The driving elements can operate in an independent manner from one another. In this manner, the product units can be pressed differently according to the respective size. The product units, can in fact have a different size from one another.

Subsequently, the motion of the pushing rods 324 is reversed, which thus move away from the lower mould element 2, the hook element 326 is returned to the rest position and the supporting rod 322 is moved to ascend vertically by an amount that is such that the pushing rods 324 are at the same height as the portions of through openings 20, of the mould element 2 immediately above the lower mould element 2 of the mould 1, free of the blocking elements 11.

At this point the blocking device 325 and the pushing rods 324 are again driven to press the product units inserted into the tubular elements 3 of the mould element 2 immediately above the lower mould element 2 of the mould 1. The operations for pressing the product units are repeated until the pressing elements 5 of all the mould elements 2 of the mould 1 have been inserted.

The second operating area 311 operates in the same manner and simultaneously to the first operating area 310, so that the pressing elements 5 of a mould element 2 are inserted simultaneously.

The apparatus for closing moulds 300 is managed and controlled by the central unit, which gives the commands for commanding the apparatus for closing moulds 300.

After all, the apparatus for closing moulds 300 is completely automated and does not require special personnel to perform the operations disclosed above.

The apparatus for closing moulds 300 thus enables the manoeuvres for closing each mould element 2 to be accelerated, i.e. the manoeuvres for inserting the pressing elements 5, and further enables significant financial savings to be made.

At the end of the operations to which the mould 1 is subjected in the mould closing station 301, the mould 1 can be transferred by the operator 22 by means of the carriage means 23 to a warehouse for storing the mould 1. For example, it can be conveyed to a cold-storage room, where the product units undergo a freezing treatment.

The apparatus for opening moulds 200 and the apparatus for closing moulds 300 are made of metal alloys comprising stainless steel.

In the plant 100, between the product removal station 501 and the washing station 601, a rod-closing apparatus (that is completely similar to the apparatus for closing moulds 300) can be further arranged in such a manner as to decrease the space occupied by the mould 1, which is moved along the advancing direction D, such as to decrease the overall dimensions of the plant 100. In this case, a corresponding rod-opening apparatus is necessary between the filling station 701 and the stacking station 801 (which is completely similar to the apparatus for opening moulds 200). The plant 100 for treating a food product thus enables the operations for opening and closing the mould elements that contain the food product to be accelerated and facilitated. The plant 100 for treating a food product is thus significantly efficient and economical.

In fact, the apparatus for opening moulds 200 and the apparatus for closing moulds 300 according to the invention, which correspond to the apparatuses in which the most complicated and longest operations of the processing cycle of the food products are performed, are totally automated, thus enabling significant time to be saved.

In an alternative embodiment, which is not shown, the apparatus for opening moulds 200 is provided with an unstacking apparatus that is completely similar to the unstacking apparatus disclosed previously with reference to the unstacking station 401. In this embodiment, the unstacking apparatus is mounted on the frame 26 of the apparatus for opening moulds 200 in a lower position than the extracting device 50.

Once the extracting device 50 has extracted the rods 7 of the mould element 2 located at the lower end of a mould 1 taken at the mould opening station 201, the arm means of the unstacking apparatus is driven, as disclosed previously, to lift the mould 1 except the mould element 2, so as to separate the latter from the mould 1 and move the mould 1 away from the mould opening station 201 towards the product removal station 501 by means of the conveying means 25.

The operations performed by the extracting device 50 and by the unstacking apparatus are repeated for a number of times that is the same as the number of mould elements less one.

In this embodiment, the mould opening station 201 and the unstacking station 401 are integrated into a single station, but the operation of the extracting device 50, of the centring device 90 and of the unstacking apparatus is substantially the same as that disclosed previously.

At the same time, the apparatus for closing moulds 300, in an alternative embodiment, which is not shown, is provided with a stacking apparatus that is completely similar to the stacking apparatus disclosed previously with reference to the stacking station 801. In this embodiment, the stacking apparatus is mounted on the frame element 302 of the apparatus for closing moulds 300 in a lower position than the pushing device 316.

When a mould element 2 coming from the filling station 701 is taken at the apparatus for closing moulds 300, the pushing device 316 is driven to push the pushing surfaces 21 in such a manner that the pressing elements 5 are inserted inside the respective tubular elements 3. Subsequently, a further mould element 2 is taken near the apparatus for closing moulds 300 and the arm means of the stacking apparatus is driven, as disclosed previously, to lift the mould element 2, whilst the further mould element 2 is taken at the apparatus for closing moulds 300, below the mould element 2. The arm means then deposits the mould element 2 lifted above the further mould element 2 and the pushing device 316 then acts against the pushing surfaces 21 of the latter.

The operations performed by the stacking apparatus and by the pushing device 316 are repeated for a number of times that is the same as the number of mould elements less one. In this embodiment, the mould closing station 301 and the stacking station 801 are integrated into a single station, but the operation of the pushing device 316, of the blocking device 325 and of the stacking apparatus is substantially the same as what has been disclosed previously.

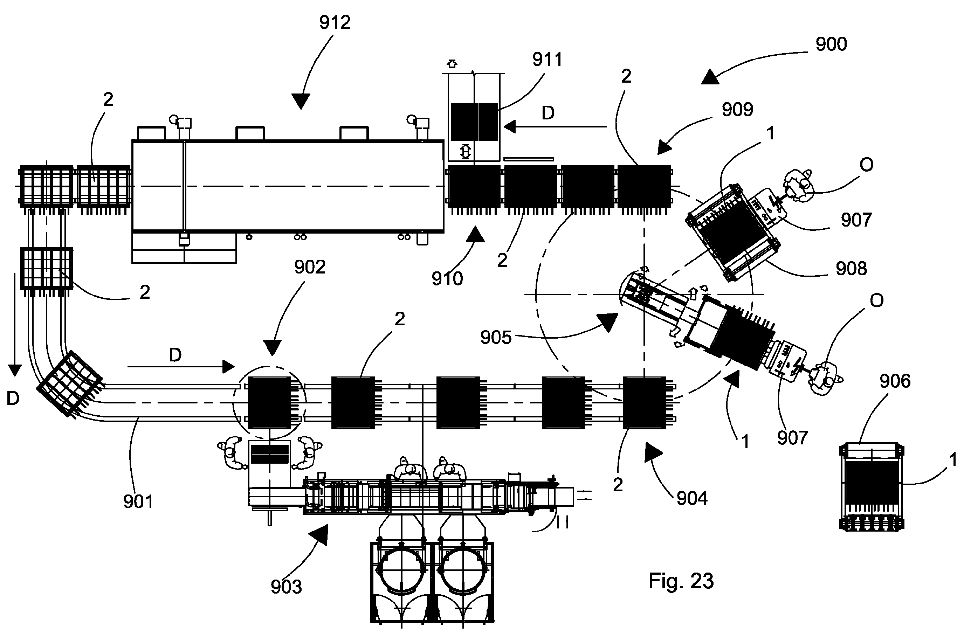

In Figure 23 there is illustrated a version of a plant 900 according to the invention.

The plant 900 comprises:
- a conveying line 901, movable in an advancing direction D, along which the mould elements 2 are moved;
- a filling station 902, in which the mould elements 2 are filled with the products to be treated, coming from a processing line;
- a removing station 904, located downstream of the filling station 902 in the advancing direction D of the conveying line, in which the mould elements 2 coming from the filling station 902 are removed from the conveying line 901 by means of an automatic handling device 905, for example a robot device, which removes the mould elements 2 and superimposes the mould elements 2 until the mould 1 is formed;
- a mould closing station 906, which is analogous to the mould closing station 301 disclosed previously, but outside the conveying line 901, in which the apparatus for closing moulds 300 interacts with the mould 1 in order to close the mould 1 and thus to enable the mould elements 2 to move from the open configuration A to the closed configuration C; conveying the moulds 1 from the automatic device 905 to the closing station 906 is performed by an operator O by means of a transport device 907 that is drivable by the operator O, for example a forklift truck;
- a mould opening station 908, which is analogous to the mould opening station 201 disclosed previously, but is also outside the conveying line 901, in which an apparatus for opening moulds 200 interacts with the moulds 1 in order to open the moulds 1 and thus enable the mould elements 2 to move from the closed configuration C to an open configuration A; the moulds 1, coming from a cold-storage room, are conveyed to the mould opening station 908 by means of the transport device 907 driven by the operator O; after the mould elements 2 have been the single mould elements 2 from the mould 1 and deposits the single mould elements 2 in an entry station 909, located at an end of the conveying line 901 opposite the end in which the removing station 904 is located;
- an emptying station 910, in which the products contained in the mould elements 2 are extracted from the mould elements 2 and sent along an evacuating line 911;
- a washing station 912, traversed by the conveying line 901, in which the emptied mould elements 2 are washed and sterilised to be ready for subsequent use; the mould elements 2 leaving the washing station 912 are conveyed along the line 901 until they return to the filling station 902.

The configuration of the plant 900 makes a significant reduction of the overall dimensions of the plant possible. In fact, stacking and unstacking the mould elements 2, closing and opening the moulds 1 in stations outside the conveying line 901 makes it possible to reduce the length of the conveying line noticeably and further also makes it possible to arrange the conveying line on two superimposed levels, a first level, along which the filling station 902 for filling the mould elements 2 and the removing station 904 are arranged, and a second level along which the entry station 909, the emptying station 910 and the washing station 912 are arranged. By arranging the conveying line 901 on two superimposed levels, it is possible to minimise both the overall length dimensions and the overall width dimensions of the plant 900 according to the invention, with a significant reduction in the space required by the plant, which enables the plant to be made also inside productive structures of limited dimensions.

## Claims

1. Apparatus (200) for opening a mould (1) suitable for containing a food product, said mould (1) comprising at least one mould element (2) comprising a tubular element (3), inside which pressing elements (5) are slidable each of which is fixed to a pair of rod means (7), said apparatus (200) comprising an extracting device (50) provided with gripping means (85) that is movable towards said rod means (7) to hook to said rod means (7) and drag said rod means (7) away from said mould (1), **characterised in that** said extracting device (50) further comprises pressure rods (81) arranged for pressing blocking elements (11) of said rod means (7) provided in said mould (1) such as to permit sliding of said rod means (7).

2. Apparatus according to claim 1, **characterised in that** it is associated with a mould opening station (201; 908) comprising a processing and control unit arranged for detecting the presence of said mould (1) in said mould opening station (201; 908) and driving said extracting device (50).

3. Apparatus according to claim 2, wherein said detecting and said driving occur automatically.

4. Apparatus according to any preceding claim, wherein said gripping means (85) comprises a gripping element (86) provided with a pair of clamping elements (87) arranged for clamping said rod means (7).

5. Apparatus according to any preceding claim, wherein said extracting device (50) is drivable to move vertically along upright means (29) of said apparatus (200), by driving means (33).

6. Apparatus according to claim 5, wherein said driving means (33) comprises a motor (33a) that drives a transmission with a flexible member (36, 37, 38) connected to said extracting device (50).

7. Apparatus according to any preceding claim, wherein said gripping means (85) is connected to actuating means (82) that moves said gripping means (85) away from or towards said mould (1).

8. Apparatus according to claim 7, wherein said actuating means (82) comprises a rack (83) and a toothed wheel (97).

9. Apparatus according to any one of claims 6 to 8, as claim 7 is appended to claim 6, wherein said extracting device (50) is tiltable on a vertical plane to enable said gripping means (85) to hook said rod means (7).

10. Apparatus (300) for closing a mould (1) suitable for containing a food product, said mould (1) comprising at least one mould element (2) comprising a tubular element (3), inside which pressing elements (5) are slidable each of which is fixed to a pair of rod means (7), said apparatus (300) comprising a pushing device (316), which is movable towards said mould (1) and is suitable for exerting a push on a pressing element (5) of said mould (1) to compress said food product in said mould (1), **characterised in that** said pushing device (316) is drivable to move vertically along upright elements (307) of said apparatus (300) by movement means (312).

11. Apparatus according to claim 10, **characterised in that** is associated with a mould closing station (301; 906) comprising a processing and control unit arranged for detecting the presence of said mould (1) in said mould closing station (301; 906) and driving said pushing device (316).

12. Apparatus according to claim 11, wherein said detecting and said driving occur automatically.

13. Apparatus according to any one of claims 10 to 12, wherein said pushing device (316) comprises at least one pushing rod (324) arranged for exerting a pressure on a pushing surface (21) of said pressing element (5), entering through openings (20) of said at least one mould element (2).

14. Apparatus according to any one of claims 10 to 13, wherein said movement means (312) comprises a motor (312a) that drives a transmission with a flexible member (313, 314, 315) connected to said pushing device (316).

15. Plant (100; 900) comprising an apparatus (200) for opening a mould (1) according to any one of claims 1 to 9 arranged in a mould opening station (201) and/or an apparatus (300) for closing said mould (1) according to any one of claims 10 to 14 arranged in a mould closing station (301).

16. Plant (100; 900) according to claim 15, and further comprising, an unstacking apparatus arranged for dismantling said mould (1) by separating mould elements (2) constituting said mould (1), said unstacking apparatus being located in an unstacking station (401) arranged downstream of said mould opening station (201).

17. Plant according to claim 16, and further comprising an unstacking apparatus arranged for dismantling said mould (1) by separating mould elements (2) constituting said mould (1), wherein said unstacking apparatus is located in said mould opening station (201).

18. Plant according to any one of claims 15 to 17, and further comprising a product removal station (501; 910), wherein said product is expelled from said mould (1), and a filling station (701; 902) wherein a new product is inserted into said mould (1).

19. Plant according to any one of claims 15 to 18, and further comprising a cleaning station (601; 912) wherein said mould elements (2) are sterilised, said cleaning station (601; 912) being located downstream of said product removal station (501; 910).

20. Plant according to any one of claims 15 to 19, and further comprising a stacking apparatus arranged for assembling said mould (1), by superimposing mould elements (2) constituting said mould (1), said stacking apparatus being located in a stacking station (801) arranged upstream of said mould closing station (301).

21. Plant according to any one of claims 15 to 19, and further comprising a stacking apparatus arranged for assembling said mould (1), by superimposing mould elements (2) constituting said mould (1), wherein said stacking apparatus is located in said mould closing station (301).

22. Plant according to any one of claims 15 to 21, further comprising conveying means (25; 901).

23. Plant according to claim 22, wherein said mould opening station (201), said mould closing station (301), said unstacking station (401), said stacking station (801), said product removal station (501) and said cleaning station (601) are arranged along said conveying means (25).

24. Plant according to claim 22, wherein said product removal station (911) and said cleaning station (912) are arranged along said conveying means (901).

25. Plant according to claim 22, or 24, wherein said mould opening station (908) and said mould closing station (906) are arranged outside said conveying means.

26. Plant according to claim 24, further comprising an automatic handling device (905), that is suitable for removing said mould elements (2) from said conveying means (901) and for stacking said mould elements (2) to assemble said mould (1), said automatic handling device (905) being further suitable for unstacking said mould elements (2) from a mould (1) and transferring the mould elements (2) to said conveying means (901).

27. Plant according to claim 25, or 26, wherein said conveying means (901) is arranged on two superimposed levels.

## Patentansprüche

1. Vorrichtung (200) für das Öffnen einer Form (1), die für ein Enthalten eines Lebensmittelprodukts geeignet ist, wobei die Form (1) zumindest ein Formelement (2) aufweist, das ein röhrenförmiges Element (3) aufweist, in dem Druckelemente (5) gleitend angeordnet sind, wobei jedes davon an einem Paar von Stabmitteln (7) befestigt ist, wobei die Vorrichtung (200) eine Extraktionsvorrichtung (50) aufweist, die mit einem Greifmittel (85) bereitgestellt ist, das in Richtung der Stabmittel (7) bewegt werden kann, um in die Stabmittel (7) einzuhaken und die Stabmittel (7) von der Form (1) wegzuziehen, **dadurch gekennzeichnet, dass** die Extraktionsvorrichtung (50) ferner Druckstäbe (81) aufweist, die für ein Pressen von Sperrelementen (11) der Stabmittel (7) angeordnet sind, die in der Form (1) derart bereitgestellt sind, dass ein Gleiten der Stabmittel (7) ermöglicht wird.

2. Vorrichtung gemäß Anspruch 1 **dadurch gekennzeichnet, dass** sie mit einer Formöffnungsstation (201; 908) verbunden ist, die eine Verarbeitungs- und Steuereinheit aufweist, die für ein Bestimmen der Anwesenheit der Form (1) in der Formöffnungsstation (201; 908) angeordnet ist und die Extraktionsvorrichtung (50) antreibt.

3. Vorrichtung gemäß Anspruch 2, wobei das Bestimmen und das Antreiben automatisch stattfinden.

4. Vorrichtung gemäß einem der vorstehenden Ansprüche, wobei das Greifmittel (85) ein Greifelement (86) aufweist, das mit einem Paar von Klammerelementen (87) bereitgestellt ist, die für ein Klammern der Stabmittel (7) angeordnet sind.

5. Vorrichtung gemäß einem der vorstehenden Ansprüche, wobei die Extraktionsvorrichtung (50) für eine senkrechte Bewegung entlang senkrecht stehender Mittel (29) der Vorrichtung (200) durch Antriebsmittel (33) angetrieben werden kann.

6. Vorrichtung gemäß Anspruch 5, wobei das Antriebsmittel (33) einen Motor (33a) aufweist, der eine Übertragung mit einem flexiblen Element (36, 37, 38) antreibt, das mit der Extraktionsvorrichtung (50) verbunden ist.

7. Vorrichtung gemäß einem der vorstehenden Ansprüche, wobei das Greifmittel (85) mit einem Betätigungsmittel (82) verbunden ist, das das Greifmittel (85) weg von oder in Richtung der Form (1) bewegt.

8. Vorrichtung gemäß Anspruch 7, wobei das Betätigungsmittel (82) einen Rahmen (83) und ein Zahnrad (97) aufweist.

9. Vorrichtung gemäß einem der Ansprüche 6 bis 8, während Anspruch 7 Anspruch 6 angefügt ist, wobei die Extraktionsvorrichtung (50) auf einer senkrechten Ebene geneigt werden kann, damit das Greifmittel (85) in die Stabmittel (7) einhaken kann.

10. Vorrichtung (300) für ein Schließen einer Form (1), die für ein Enthalten eines Lebensmittelprodukts geeignet ist, wobei die Form (1) zumindest ein Formelement (2) aufweist, das ein röhrenförmiges Element (3) aufweist, in dem Druckelemente (5) gleitend angeordnet sind, wobei jedes davon an einem Paar von Stabmitteln (7) befestigt ist, wobei die Vorrichtung (300) eine Schubvorrichtung (316) aufweist, die in Richtung der Form (1) bewegt werden kann und geeignet ist, einen Schub auf ein Druckelement (5) der Form (1) auszuüben, um das Lebensmittelprodukt in der Form (1) zusammenzudrücken, **dadurch gekennzeichnet, dass** die Schubvorrichtung (316) für eine Senkrechtbewegung entlang senkrecht stehender Elemente (307) der Vorrichtung (300) durch Bewegungsmittel (312) angetrieben werden kann.

11. Vorrichtung gemäß Anspruch 10, **dadurch gekennzeichnet, dass** sie mit einer Formschließstation (301; 906) verbunden ist, die eine Verarbeitungs- und Steuereinheit aufweist, die für ein Bestimmen der Anwesenheit der Form (1) in der Formschließstation (301; 906) und Antreiben der Schubvorrichtung (316) angepasst ist.

12. Vorrichtung gemäß Anspruch 11, wobei das Bestimmen und das Antreiben automatisch stattfinden.

13. Vorrichtung gemäß einem der Ansprüche 10 bis 12, wobei die Schubvorrichtung (316) zumindest einen Schubstab (224) aufweist, der für ein Ausüben eines Drucks auf eine Schuboberfläche (21) des Druckelements (5) angepasst ist, das durch Öffnungen (20) des zumindest einen Formelements (2) eintritt.

14. Vorrichtung gemäß einem der Ansprüche 10 bis 13, wobei das Bewegungsmittel (312) einen Motor (312a) aufweist, der eine Übertragung mit einem flexiblen Element (313, 314, 315) antreibt, das mit der Schubvorrichtung (316) verbunden ist.

15. Anlage (100; 900), die eine Vorrichtung (200) für ein Öffnen einer Form (1) gemäß einem der Ansprüche 1 bis 9, die in einer Formöffnungsstation (201) angeordnet ist, und/oder eine Vorrichtung (300) für ein Schließen der Form (1) gemäß einem der Ansprüche 10 bis 14 aufweist, die in einer Formschließstation (301) angeordnet ist.

16. Anlage (100; 900) gemäß Anspruch 15, die ferner eine Entstapelvorrichtung aufweist, die für ein Zerlegen der Form (1) durch Trennen der Formelemente (2) angepasst ist, aus denen die Form (1) besteht, wobei die Entstapelvorrichtung in einer Entstapelstation (401) lokalisiert ist, die der Formöffnungsstation (201) nachgeschaltet angeordnet ist.

17. Anlage gemäß Anspruch 16, die ferner eine Entstapelvorrichtung aufweist, die für ein Zerlegen der Form (1) durch Trennen von Formelementen (2) angeordnet ist, aus denen die Form (1) besteht, wobei die Entstapelvorrichtung in der Formöffnungsstation (201) lokalisiert ist.

18. Anlage gemäß einem der Ansprüche 15 bis 17, die ferner eine Produktentfernungsstation (501; 910), in der das Produkt aus der Form (1) gestoßen wird, und eine Füllstation (701; 902) aufweist, in der ein neues Produkt in die Form (1) eingefügt wird.

19. Anlage gemäß einem der Ansprüche 15 bis 18, die ferner eine Reinigungsstation (601; 912) aufweist, in der die Formelemente (3) sterilisiert werden, wobei die Reinigungsstation (601; 912) der Produktentfernungsstation (501; 910) nachgeschaltet lokalisiert ist.

20. Anlage gemäß einem der Ansprüche 15 bis 19, die ferner eine Stapelvorrichtung aufweist, die für ein Zusammenbauen der Form (1) durch Aufsetzen von Formelementen (2) angepasst ist, aus denen die Form (1) besteht, wobei die Stapelvorrichtung in einer Stapelstation (801) lokalisiert ist, die der Formschließstation (301) vorgeschaltet angeordnet ist.

21. Anlage gemäß einem der Ansprüche 15 bis 19, die ferner eine Stapelvorrichtung aufweist, die für ein Zusammenbauen der Form (1) durch Aufsetzen von Formelementen (2) angepasst ist, aus denen die Form (1) besteht, wobei die Stapelvorrichtung in der Formschließstation (301) lokalisiert ist.

22. Anlage gemäß einem der Ansprüche 15 bis 21, die ferner Fördermittel (25: 901) aufweist.

23. Anlage gemäß Anspruch 22, wobei die Formöffnungsstation (201), die Formschließstation (301), die Entstapelstation (401), die Stapelstation (801), die Produktentfernungsstation (501) und die Reinigungsstation (601) entlang dem Fördermittel (25) angeordnet sind.

24. Anlage gemäß Anspruch 22, wobei die Produktentfernungsstation (911) und die Reinigungsstation (912) entlang dem Fördermittel (901) angeordnet sind.

25. Anlage gemäß Anspruch 22 oder 24, wobei die Formöffnungsstation (908) und die Formschließstation (906) außerhalb des Fördermittels angeordnet sind.

26. Anlage gemäß Anspruch 24, die ferner eine automatische Abwicklungsvorrichtung (905) aufweist, die für ein Entfernen der Formelemente (2) von dem Fördermittel (901) und ein Stapeln der Formelemente (2) für ein Zusammenbauen der Form (1) geeignet ist, wobei die automatische Abwicklungsvorrichtung (905) ferner zum Entstapeln der Formelemente (2) einer Form (1) und Übertragen der Formelemente (2) zu dem Fördermittel (901) geeignet ist.

27. Anlage gemäß Anspruch 25 oder 26, wobei das Fördermittel (901) in zwei übereinander liegenden Ebenen angeordnet ist.

## Revendications

1. Appareil (200) d'ouverture d'un moule (1) apte à contenir un produit alimentaire, ledit moule (1) comprenant au moins un élément de moule (2) comprenant un élément tubulaire (3), à l'intérieur duquel des éléments de pressage (5) peuvent coulisser, dont chacun est fixé à une paire de moyens de tige (7), ledit appareil (200) comprenant un dispositif d'extraction (50) pourvu de moyens de préhension (85) qui est déplaçable vers lesdits moyens de tige (7) pour accrocher lesdits moyens de tige (7) et tirer lesdits moyens de tige (7) en éloignement dudit moule (1), **caractérisé en ce que** ledit dispositif d'extraction (50) comprend en outre des tiges de pression (81) agencées pour venir presser des éléments de blocage (11) desdits moyens de tige (7) prévus dans ledit moule (1) de manière à permettre le coulissement desdits moyens de tige (7).

2. Appareil selon la revendication 1, **caractérisé en ce qu'**il est associé à un poste d'ouverture de moule (201; 908) comprenant une unité de traitement et de commande agencée pour détecter la présence dudit moule (1) dans ledit poste d'ouverture de moule (201; 908) et pour piloter ledit dispositif d'extraction (50).

3. Appareil selon la revendication 2, dans lequel ladite détection et ledit pilotage se produisent automatiquement.

4. Appareil selon l'une quelconque des revendications précédentes, dans lequel lesdits moyens de préhension (85) comprennent un élément de préhension (86) pourvu d'une paire d'éléments de serrage (87) agencés pour serrer lesdits moyens de tige (7).

5. Appareil selon l'une quelconque des revendications précédentes, dans lequel ledit dispositif d'extraction (50) peut être entraîné pour être déplacé verticalement le long de moyens de montants (29) dudit appareil (200), par des moyens d'entraînement (33).

6. Appareil selon la revendication 5, dans lequel lesdits moyens d'entraînement (33) comprennent un moteur (33a) qui entraîne une transmission pourvue d'un membre flexible (36, 37, 38) relié audit dispositif d'extraction (50).

7. Appareil selon l'une quelconque des revendications précédentes, dans lequel lesdits moyens de préhension (85) sont reliés à des moyens d'actionnement (82) qui déplacent lesdits moyens de préhension (85) en éloignement ou en rapprochement dudit moule (1).

8. Appareil selon la revendication 7, dans lequel lesdits moyens d'actionnement (82) comprennent une crémaillère (83) et une roue dentée (97).

9. Appareil selon l'une quelconque des revendications 6 à 8, lorsque la revendication 7 dépend de la revendication 6, dans lequel ledit dispositif d'extraction (50) est inclinable selon un plan vertical pour permettre auxdits moyens de préhension (85) d'accrocher lesdits moyens de tige (7).

10. Appareil (300) de fermeture d'un moule (1) apte à contenir un produit alimentaire, ledit moule (1) comprenant au moins un élément de moule (2) comprenant un élément tubulaire (3), à l'intérieur duquel des éléments de pressage (5) peuvent coulisser, dont chacun est fixé à une paire de moyens de tige (7), ledit appareil (300) comprenant un dispositif de poussée (316), qui est déplaçable vers ledit moule (1) et est apte à exercer une poussée sur un élément de pressage (5) dudit moule (1) pour comprimer ledit produit alimentaire dans ledit moule (1), **caractérisé en ce que** ledit dispositif de poussée (316) peut être entraîné pour être déplacé verticalement le long d'éléments de montants (307) dudit appareil (300) par des moyens de déplacement (312).

11. Appareil selon la revendication 10, **caractérisé en ce qu'**il est associé à un poste de fermeture de moule (301; 906) comprenant une unité de traitement et de commande agencée pour détecter la présence dudit moule (1) dans ledit poste de fermeture de moule (301; 906) et pour piloter ledit dispositif de poussée (316).

12. Appareil selon la revendication 11, dans lequel ladite détection et ledit pilotage se produisent automatiquement.

13. Appareil selon l'une quelconque des revendications 10 à 12, dans lequel ledit dispositif de poussée (316) comprend au moins une tige de poussée (324) agencée pour exercer une pression sur une surface d'appui (21) dudit élément de pressage (5), en entrant par des ouvertures (20) dudit au moins un élément de moule (2).

14. Appareil selon l'une quelconque des revendications 10 à 13, dans lequel lesdits moyens de déplacement (312) comprennent un moteur (312a) qui entraîne une transmission pourvue d'un membre flexible (313, 314, 315) relié audit dispositif de poussée (316).

15. Installation (100; 900) comprenant un appareil (200) d'ouverture d'un moule (1) selon l'une quelconque des revendications 1 à 9 agencé dans un poste d'ouverture de moule (201) et/ou un appareil (300) de fermeture dudit moule (1) selon l'une quelconque des revendications 10 à 14 agencé dans un poste de fermeture de moule (301).

16. Installation (100; 900) selon la revendication 15, et comprenant en outre, un appareil de désempilage agencé pour le démontage dudit moule (1) en séparant les éléments de moule (2) constituant ledit moule (1), ledit appareil de désempilage étant situé dans un poste de désempilage (401) agencé en aval dudit poste d'ouverture de moule (201).

17. Installation selon la revendication 16, et comprenant en outre un appareil de désempilage agencé pour le démontage dudit moule (1) en séparant les éléments de moule (2) constituant ledit moule (1), dans laquelle ledit appareil de désempilage est situé dans ledit poste d'ouverture de moule (201).

18. Installation selon l'une quelconque des revendications 15 à 17, et comprenant en outre un poste d'enlèvement de produit (501; 910), dans lequel ledit produit est expulsé dudit moule (1), et un poste de remplissage (701; 902) dans lequel un nouveau produit est inséré dans ledit moule (1).

19. Installation selon l'une quelconque des revendications 15 à 18, et comprenant en outre un poste de nettoyage (601; 912) dans lequel lesdits éléments de moule (2) sont stérilisés, ledit poste de nettoyage (601; 912) étant situé en aval dudit poste d'enlèvement de produit (501; 910).

20. Installation selon l'une quelconque des revendications 15 à 19, et comprenant en outre un appareil d'empilage agencé pour assembler ledit moule (1), en superposant les éléments de moule (2) constituant ledit moule (1), ledit appareil d'empilage étant situé dans un poste d'empilage (801) agencé en amont dudit poste de fermeture de moule (301).

21. Installation selon l'une quelconque des revendications 15 à 19, et comprenant en outre un appareil d'empilage agencé pour assembler ledit moule (1), en superposant les éléments de moule (2) constituant ledit moule (1), dans laquelle ledit appareil d'empilage est situé dans ledit poste de fermeture de moule (301).

22. Installation selon l'une quelconque des revendications 15 à 21, comprenant en outre des moyens d'acheminement (25; 901).

23. Installation selon la revendication 22, dans laquelle ledit poste d'ouverture de moule (201), ledit poste de fermeture de moule (301), ledit poste de désempilage (401), ledit poste d'empilage (801), ledit poste d'enlèvement de produit (501) et ledit poste de nettoyage (601) sont agencés le long desdits moyens d'acheminement (25).

24. Installation selon la revendication 22, dans laquelle ledit poste d'enlèvement de produit (911) et ledit poste de nettoyage (912) sont agencés le long desdits moyens d'acheminement (901).

25. Installation selon la revendication 22, ou 24, dans laquelle ledit poste d'ouverture de moule (908) et ledit poste de fermeture de moule (906) sont agencés en dehors desdits moyens d'acheminement.

26. Installation selon la revendication 24, comprenant en outre un dispositif de manutention automatique (905), qui est apte à enlever lesdits éléments de moule (2) de lesdits moyens d'acheminement (901) et à empiler lesdits éléments de moule (2) pour assembler ledit moule (1), ledit dispositif de manutention automatique (905) étant en outre apte à désempiler lesdits éléments de moule (2) d'un moule (1) et à transférer les éléments de moule (2) à lesdits moyens d'acheminement (901).

27. Installation selon la revendication 25, ou 26, dans laquelle lesdits moyens d'acheminement (901) est agencée sur deux niveaux superposés.
